# EUROPEAN PATENT SPECIFICATION

(11) **EP 1 626 079 B1**
(45) Date of publication and mention of the grant of the patent: **02.04.2008**
(21) Application number: 05014811.3
(22) Date of filing: 08.07.2005
(51) Int. Cl.: C09K 19/30

(54) **Polymerisable mesogenic cyclohexylphenyl derivatives**
Polymerisierbare mesogene Cyclohexylphenylderivate
Dérivés mésogéniques polymérisables de cyclohexylphényle

(30) Priority: 10.08.2004 EP 04018917
(43) Date of publication of application: 15.02.2006
(73) Proprietor: Merck Patent GmbH, 64293 Darmstadt (DE)
(72) Inventor: Klein, Markus, Dr., 64331 Weiterstadt (DE); Derow, Stephan, Dr., 64347 Griesheim (DE)

(56) References cited:
- EP-A- 0 768 358
- DE-A1- 4 110 525
- GB-A- 2 379 931
- US-A- 5 055 223
- US-A- 5 185 098
- US-A- 5 536 443
- US-A- 5 709 911
- PATENT ABSTRACTS OF JAPAN vol. 1995, no. 06, 31 July 1995 (1995-07-31) & JP 07 069983 A (DAINIPPON INK & CHEM INC), 14 March 1995 (1995-03-14)

## Description

### Field of the Invention

The invention relates to new polymerisable mesogenic or liquid crystalline compounds comprising a terminal cyclohexylphenyl group wherein the phenyl group has polar substituents, to polymerisable mesogenic or liquid crystalline mixtures and anisotropic polymers prepared thereof, and to the use of the new compounds and the mixtures and polymers prepared thereof in optical and electrooptical devices, adhesives, synthetic resins with anisotropic mechanical properties, cosmetics, diagnostics, liquid crystal pigments, decorative and security applications, nonlinear optics, optical information storage, electronic devices like organic field effect transistors (FET or OFET) or electroluminescent devices.

### Background and Prior Art

Polymerisable mesogenic or liquid crystal (LC) compounds, which are also known as reactive mesogens (RM), have been described in prior art for various purposes. For example, they can be used for the preparation of linear or crosslinked LC side chain polymers. Furthermore, they can be aligned in their LC phase and subsequently polymerized in situ to give linear or crosslinked LC polymer films with uniform orientation of high quality. These films can be used as optical elements like polarisers or compensators in flat panel displays, as described for example in EP 0 397 263, WO 98/00475, WO 98/04651 or WO 98/12584.

The polymerisable mesogenic compounds described in prior art, however, often exhibit LC phases only in a small temperature range or do not show mesophase behaviour at all. Another drawback for specific applications is that prior art compounds often exhibit high values of the birefringence.

In particular where polymerisable mesogenic compounds are used in optical phase retardation, compensation or alignment layers or films for LC displays (LCD), it is desirable to have available materials of which the optical properties, such as the birefringence, optical retardation and optical dispersion (wavelength dependence of the birefringence) can be adapted to those of the LC mixture in the display cell, so that optimum compensation can be achieved.

Further to the use as optical films in displays, polymerisable mesogenic compounds have been suggested for use in the active, switchable layer of an LCD.

For example, displays are known which are switched between transparent and scattering states and comprise a low molar mass liquid crystal (LC) medium and a phase-separated polymerised LC material, like for example PDLC (polymer dispersed liquid crystal) displays as described in WO 93/22397, or polymer gel or polymer network displays of the scattering type, as described in US 5,538,768, US 5,543,075 or EP 0 451 905.

Furthermore, displays are known wherein a low molar mass LC medium is switched between two non-scattering states, like conventional displays of e.g. the TN or STN (twisted nematic, supertwisted nematic), ECB (electrically controlled birefringence), VA (vertically aligned) or IPS (in-plane-switching) mode, and which further comprise a polymerised LC material in order to create a multidomain structure for improving the contrast at wide viewing angles or to stabilise the different switching states for reducing the driving voltage and switching times. Such displays are described for example in US 5,189,540, US 6,177,972, EP 0 903 392, and Hasebe et al., Jpn. J. Appl. Phys. 1994, 33, 6245.

For use in the switchable layer of LCDs the polymerisable compounds are typically mixed with a low molar mass LC medium. Therefore it is required that the polymerisable compounds do not negatively affect the properties, like the LC phase range, birefringence and dielectric anisotropy of the LC medium. For use in switchable displays that are not of the scattering type, and where the polymerised material is not macroscopically phase separated from the low molar mass LC medium, the polymerisable compounds should further show good miscibility with the LC medium.

The polymerisable mesogenic compounds described in prior art, however, do often exhibit high melting points, show poor solubility in low molar mass LC media or tend to negatively influence the LC and electrooptical properties of LC media.

Thus, there is a demand for polymerisable mesogenic compounds with low melting points which are useful for the preparation of oriented LC polymer films as optical retarders, and for the use in the active layer of switchable LC devices, for example in mixture with low molar mass LC media where they should have optical and electrooptical properties adapted to those of the LC media and good solubility in the LC media.

Furthermore, regarding the broad range of applications for polymerisable compounds it is desirable for the expert to have available further compounds of this type that are easy to synthesize and fulfill the various requirements as described above.

It was an aim of the invention to provide new polymerisable mesogenic compounds with advantageous properties as mentioned above, thus extending the pool of polymerisable mesogenic compounds available to the expert. Other aims of the present invention are immediately evident to the person skilled in the art from the following detailed description.

The inventors of the present invention have found that these aims can be achieved by providing polymerisable mesogenic compounds as claimed in the present invention, comprising a terminal fluorinated phenyl group.

JP-A-07-069983 discloses polymerisable mesogenic compounds, including 4-(3,4-difluorophenyl)cyclohexyl acrylate and 4-(trans-4-3,4,5-trifluorophenyl)cyclohexyl) cyclohexyl acrylate, but does not specifically disclose compounds according to the present invention.

The documents US 5,536,443 A, US 5,055,223 A, US 5,185,098 A, DE 41 10 525 A1, EP 0 768 358 A1, US 5,709,911 A and GB 2 379 931 A disclose liquid crystalline compounds comprising cyclohexylene rings, but do not disclose compounds according to the present invention.

### Definitions of Terms

The term 'liquid crystal or mesogenic material' or 'liquid crystal or mesogenic compound' means materials or compounds comprising one or more rod-shaped, board-shaped or disk-shaped mesogenic groups, i.e. groups with the ability to induce liquid crystal (LC) phase behaviour. LC compounds with rod-shaped or board-shaped groups are also known in the art as 'calamitic' liquid crystals. LC compounds with a disk-shaped group are also known in the art as 'discotic' liquid crystals. The compounds or materials comprising mesogenic groups do not necessarily have to exhibit an LC phase themselves. It is also possible that they show LC phase behaviour only in mixtures with other compounds, or when the mesogenic compounds or materials, or the mixtures thereof, are polymerised.

For the sake of simplicity, the term 'liquid crystal material' is used hereinafter for both mesogenic and LC materials.

Polymerisable compounds with one polymerisable group are also referred to as 'monoreactive' compounds, compounds with two polymerisable groups as 'direactive' compounds, and compounds with more than two polymerisable groups as 'multireactive' compounds. Compounds without a polymerisable group are also referred to as 'non-reactive' compounds.

The term 'reactive mesogen' (RM) means a polymerisable mesogenic or liquid crystal compound.

The term 'film' includes rigid or flexible, self-supporting or freestanding films with mechanical stability, as well as coatings or layers on a supporting substrate or between two substrates.

### Summary of the Invention

The invention relates to compounds of formula I 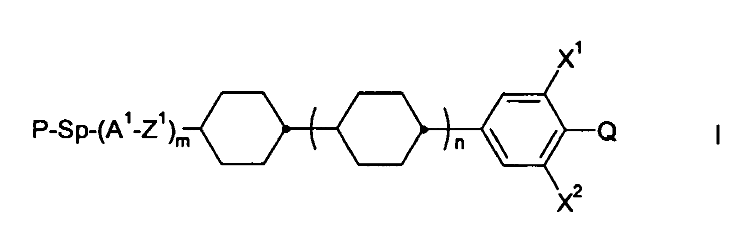 wherein
- P: is a polymerisable group selected from 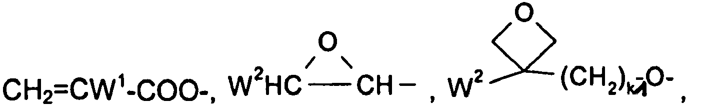 CH₂=CW²-O-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- and W⁴W⁵W⁶Si-, with W¹ being H, Cl, CN, phenyl or alkyl with 1 to 5 C-atoms, in particular H, Cl or CH₃, W² and W³ being independently of each other H or alkyl with 1 to 5 C-atoms, in particular methyl, ethyl or n-propyl, W⁴, W⁵ and W⁶ being independently of each other Cl, oxaalkyl or oxacarbonylalkyl with 1 to 5 C-atoms, Phe being 1,4-phenylene that is optionally substituted by one or more groups L as defined above, and k₁ and k₂ being independently of each other 0 or 1.
- Sp: is a spacer group,
- A¹: is in case of multiple occurrence independently of one another an aromatic or aliphatic 5- or 6-ring, or a group comprising two or three fused aromatic or aliphatic 5- or 6-rings, these rings optionally containing one or more hetero atoms selected from N, O and S, and optionally being mono- or polysubstituted,
- Z¹: is in case of multiple occurrence independently of one another -O-, -S-, -CO-, -COO-, -OCO-, -S-CO-, -CO-S-, -O-CO-O-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CR⁰-, -CH=CH-, -CH=CF-, -CY¹=CY¹-, -C≡C-, -CH=CH-COO-, -OCO-CH=CH- or a single bond,
- R° and R°°: are independently of each other H or alkyl with 1 to 12 C-atoms,
- Y¹ and Y²: are independently of each other H, F, Cl or CN,
- Q: is F, Cl, or fluorinated alkyl, alkoxy, alkenyl or alkenyloxy with 1 to 6 C-atoms,
- X¹ and X²: are independently of each other H, F or Cl,
- m: is 0, 1 or 2, and
- n: is 0 or 1.

The invention further relates to a polymerisable liquid crystal material comprising at least one compound of formula I.

The invention further relates to a liquid crystal material comprising at least one compound of formula I and one or more non-polymerisable liquid crystal compounds.

The invention further relates to an anisotropic polymer or polymer film obtained from one or more compounds of formula I or from a polymerisable liquid crystal material comprising at least one compound of formula I.

The invention further relates to the use of a compound of formula I, polymerisable material or polymer prepared thereof in optical films, polarisers, compensators, beam splitters, reflective films, alignment layers, colour filters, holographic elements, hot stamping foils, coloured images, decorative or security markings, liquid crystal pigments, adhesives, synthetic resins with anisotropic mechanical properties, cosmetics, diagnostics, nonlinear optics, optical information storage, as chiral dopants, in electronic devices like for example field effect transistors (FET) as components of integrated circuitry, as thin film transistors in flat panel display applications or for Radio Frequency Identification (RFID) tags, or in semiconducting components for organic light emitting diode (OLED) applications such as electroluminescent displays or backlights of e.g. liquid crystal displays, for photovoltaic or sensor devices, as electrode materials in batteries, as photoconductors, or for electrophotographic applications like electrophotographic recording.

The invention further relates to a liquid crystal mixture or a polymer gel or network comprising one or more compounds of formula I and one or more low molar mass liquid crystal compounds.

The invention further relates to a display comprising in its active layer at least one compound of formula I or a liquid crystal mixture or polymer comprising at least one compound of formula I.

### Detailed Description of the Invention

The polymerisable compounds and mixtures according to the present invention have good film-forming properties, and are especially suitable for the preparation of anisotropic polymer or copolymer films with uniform orientation, optionally together with other mesogenic or non-mesogenic co-monomers. The inventive polymerisable compounds exhibit liquid crystal phases in suitable temperature ranges either themselves or when mixed with other compounds. Furthermore, polymerisable compounds and mixtures according to the present invention have reduced tendency of phase separation during polymerisation. Also it is possible, by appropriate selection of the substituents on the terminal phenyl ring, to control the dielectric anisotropy of the polymerisable compounds.

Q in formula I is preferably selected from F, Cl, CF₃, OCF₃, OCHF₂ or OC₂F₅, in particular F, Cl or OCF₃.

Very preferred are compounds of formula I wherein
- Q is F,
- X¹ is F,
- X¹ and X² are F,
- n is 1,
- m is 0,
- Sp is alkylene with 1 to 20, preferably 1 to 12, C atoms which is optionally mono- or polysubstituted by F and wherein one or more non-adjacent CH₂ groups are optionally replaced, in each case independently from one another, by -O-, -CO-, -O-CO-, -CO-O-, -O-CO-O-, -NR⁰-CO-O-, -O-CO-NR⁰-, -NR°-CO-NR°- in such a manner that O-atoms are not directly linked to one another, wherein R° is as defined in formula I,
- Sp is alkylene with 1 to 20, preferably 1 to 12, C atoms which is optionally mono- or polysubstituted by F and wherein one or more non-adjacent CH₂ are replaced, in each case independently from one another, by -CO-, -O-CO-, -CO-O-, -O-CO-O-, -NR⁰-CO-O-, -O-CO-NR⁰-, -NR°-CO-NR°- in such a manner that O-atoms are not directly linked to one another, wherein R° is as defined in formula I.

Z¹ in formula I is preferably -CO-O-, -O-CO-, -OCF₂-, -CF₂O- or a single bond.

A¹ in formula I is preferably selected from 1,4-cyclohexylene, 1,4-phenylene, tetrahydropyrane-2,5-diyl, dioxane-2,5-diyl, furane-2,5-diyl, thiophene-2,5-diyl, pyrrol-2,5-diyl, pyridine-2,5-diyl, pyrimidine-2,5-diyl, naphthalene-2,6-diyl, 1,2,3,4-tetrahydronaphthalene-2,6-diyl, decaline-2,6-diyl, indane-2,5-diyl, these groups optionally being mono- or polysubstituted by L, with L being selected from F, Cl, Br, I, CN, NO₂ or alkyl, alkoxy, alkylcarbonyl, alkoxycarbonyl, alkylcarbonyloxy or alkoxycarbonyloxy with 1 to 20 C atoms, wherein one or more H atoms may be substituted by F or Cl.

L is preferably selected from F, Cl, CN, NO₂, CH₃, C₂H₅, OCH₃, OC₂H₅, COCH₃, COC₂H₅, COOCH₃, COOC₂H₅, CF₃, OCF₃, OCHF₂ or OC₂F₅, in particular F, Cl, CN, CH₃, C₂H₅, OCH₃, COCH₃ or OCF₃, most preferably F, Cl, CH₃, OCH₃ or COCH₃.

Preferably -(A¹-Z¹)ₘ- is selected from the groups listed below or their mirror images. Therein, Phe is 1,4-phenylene, PheL is 1,4-phenylene that is substituted by 1 to 4 groups L as defined above, Cyc is 1,4-cyclohexylene and Z has one of the meanings of Z¹ in formula I.

-Phe-Z- II-1

-Cyc-Z- II-2

-PheL-Z- II-3

-Cyc-Z-Cyc-Z- II-4

-Phe-Z-Cyc-Z- II-5

-PheL-Z-Cyc-Z- II-6

-Phe-Z-Phe-Z- II-7

-PheL-Z-Phe-Z- II-8

-PheL-Z-PheL-Z- II-9

Z is preferably -COO-, -OCO-, -OCF₂- or a single bond.

Especially preferred are groups of formula II-1, wherein Z is -COO-.

PheL in these preferred formulae is preferably denoting 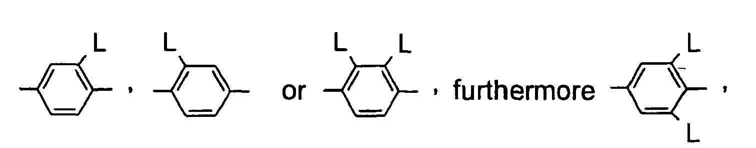 with L having each independently one of the meanings given above.

The polymerisable group P is a group that is capable of participating in a polymerisation reaction, like radicalic or ionic chain polymerisation, polyaddition or polycondensation, or capable of being grafted, for example by condensation or addition, to a polymer backbone in a polymeranaloguous reaction. Especially preferred are polymerisable groups for chain polymerisation reactions, like radicalic, cationic or anionic polymerisation. Very preferred are polymerisable groups comprising a C-C double or triple bond, and polymerisable groups capable of polymerisation by a ring-opening reaction, like oxetanes or epoxides.

Especially preferred groups P are CH₂=CH-COO-, CH₂=C(CH₃)-COO-, CH₂=CH-, CH₂=CH-O-, (CH₂=CH)₂CH-OCO-,

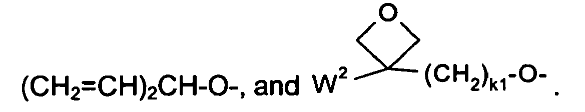

Very preferred are acrylate and oxetane groups. Oxetanes produce less shrinkage upon polymerisation (cross-linking), which results in less stress development within films, leading to higher retention of ordering and fewer defects. Oxetane cross-linking also requires a cationic initiator, which unlike free radical initiator is inert to oxygen.

As for the spacer group Sp all groups can be used that are known for this purpose to the skilled in the art. The spacer group Sp is preferably of formula Sp'-X, such that P-Sp- is P-Sp'-X-, wherein
- Sp': is alkylene with 1 to 20 C atoms, preferably 1 to 12 C-atoms, which is optionally mono- or polysubstituted by F, Cl, Br, I or CN, and wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S-CO-, -CO-S-, -NR⁰-CO-O-, -O-CO-NR⁰-, -NR⁰-CO-NR⁰-, -CH=CH- or -C≡C- in such a manner that O and/or S atoms are not linked directly to one another,
X is -O-, -S-, -CO-, -COO-, -OCO-, -O-COO-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY¹=CY²-, -C≡C-, -CH=CH-COO-, -OCO-CH=CH- or a single bond,
R⁰ and R⁰⁰ are independently of each other H or alkyl with 1 to 12 C-atoms, and
Y¹ and Y² are independently of each other H, F, Cl or CN.

X is preferably -O-, -S-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=N-, -N=CH-, -N=N-, -CH=CR⁰-, -CY¹=CY²-, -C≡C- or a single bond, in particular -O-, -S-, -C≡C-, -CY¹=CY²- or a single bond, very preferably a group that is able to from a conjugated system, such as -C≡C- or -CY¹=CY²-, or a single bond.

Typical groups Sp' are, for example, -(CH₂)ₚ-, -(CH₂CH₂O)_{q}-CH₂CH₂-, -CH₂CH₂-S-CH₂CH₂- or -CH₂CH₂-NH-CH₂CH₂- or -(SiR⁰R⁰⁰-O)ₚ-, with p being an integer from 2 to 12, q being an integer from 1 to 3 and R° and R°° having the meanings given above.

Preferred groups Sp' are ethylene, propylene, butylene, pentylene, hexylene, heptylene, octylene, nonylene, decylene, undecylene, dodecylene, octadecylene, ethyleneoxyethylene, methyleneoxybutylene, ethylene-thioethylene, ethylene-N-methyliminoethylene, 1-methylalkylene, ethenylene, propenylene and butenylene for example.

In another preferred embodiment the group Sp' is a chiral group of formula III: 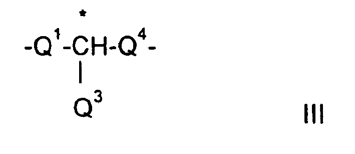 wherein
- Q¹: is an alkylene or alkylene-oxy group with 1 to 9 C atoms or a single bond,
- Q³: is an alkyl or alkoxy group with 1 to 10 C atoms which may be unsubstituted, mono- or polysubstituted by F, Cl, Br or CN, it being also possible for one or more non-adjacent CH₂ groups to be replaced, in each case independently from one another, by -C≡C-, -O-, -S-, -NH-, -N(CH₃)-, -CO-, -COO-, -OCO-, -OCO-O-, -S-CO- or -CO-S- in such a manner that oxygen atoms are not linked directly to one another,
- Q⁴: is an alkylene or alkylene-oxy group with 1 to 10 C atoms or a single bond, being different from Q¹,
with Q¹ being linked to the polymerisable group P.

Particularly preferred compounds of formula I are those of the following formulae 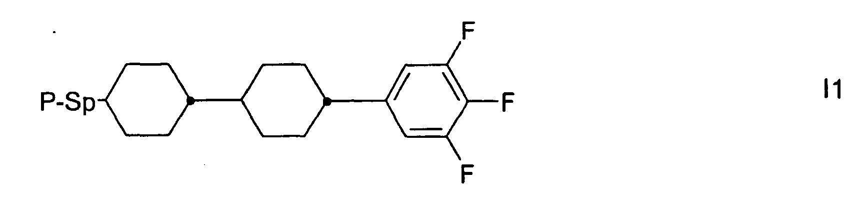 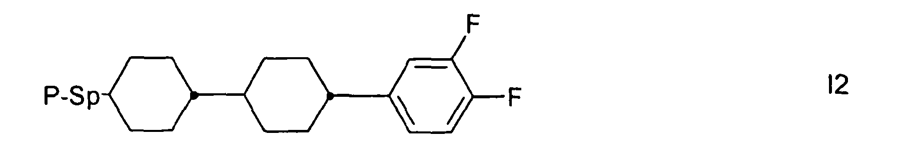 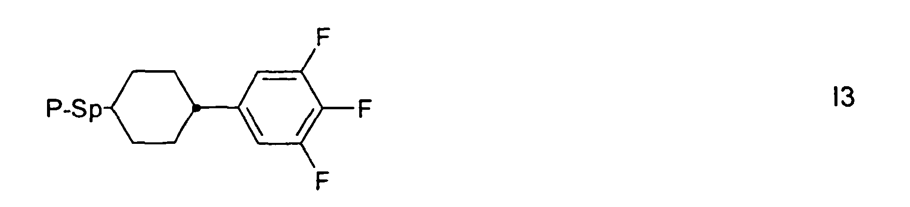 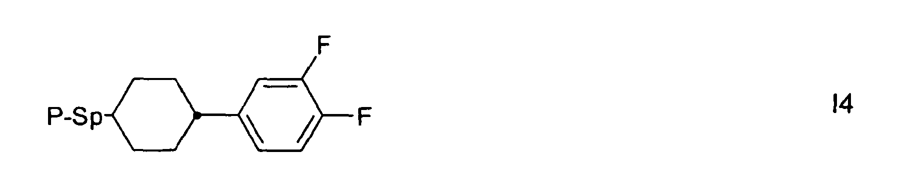 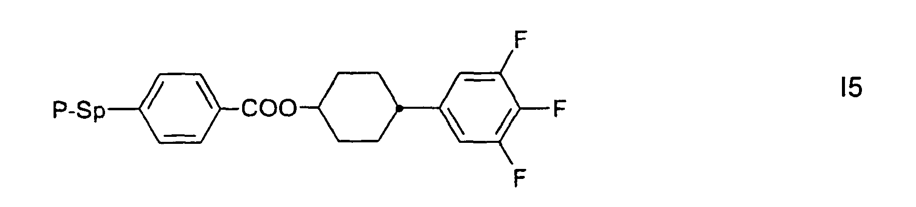 wherein P and Sp have the meanings of formula I.

Further preferred are compounds of the following formulae 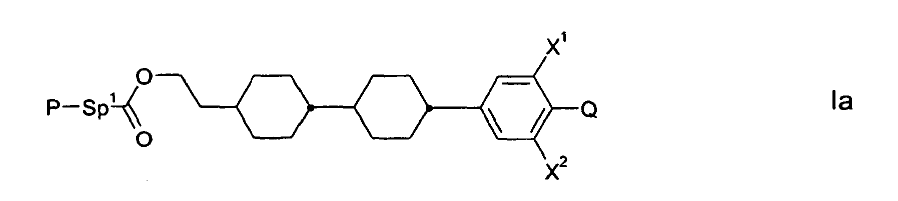 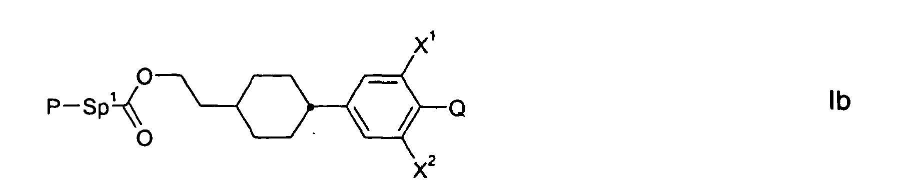 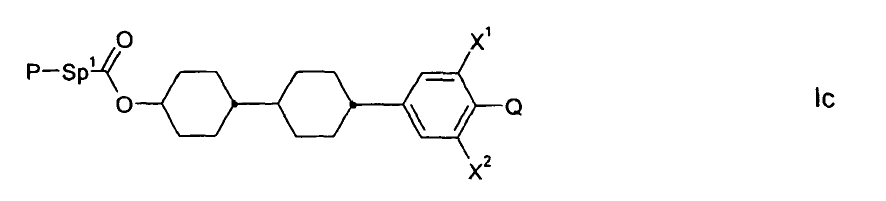 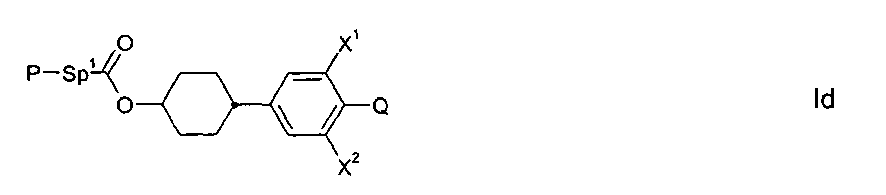 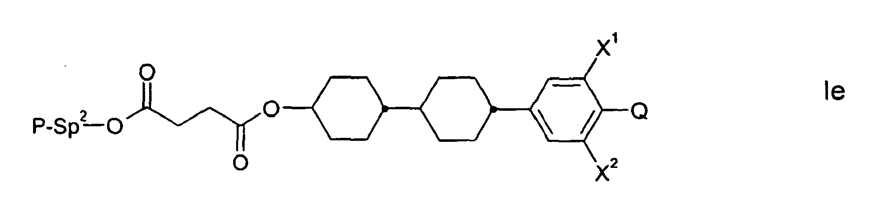 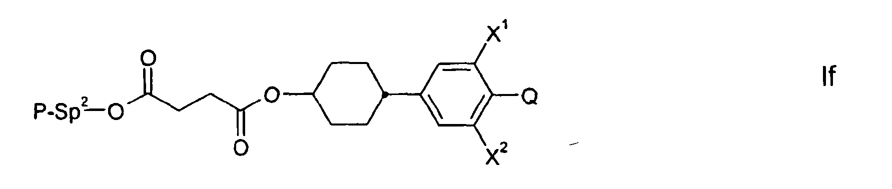 wherein P, X¹, X² and Q are as defined in formula I, Sp¹ has one of the meanings of Sp' given above and Sp² is alkylene with 1 to 12 C-atoms.

The compounds of formula I can be synthesized according to or in analogy to methods which are known per se and which are described in standard works of organic chemistry such as, for example, Houben-Weyl, Methoden der organischen Chemie, Thieme-Verlag, Stuttgart. Suitable methods of preparation for compounds like those of formula la and Ib, for example, are described below in Scheme 1 and Scheme 2, respectively. Further methods can be taken from the examples.

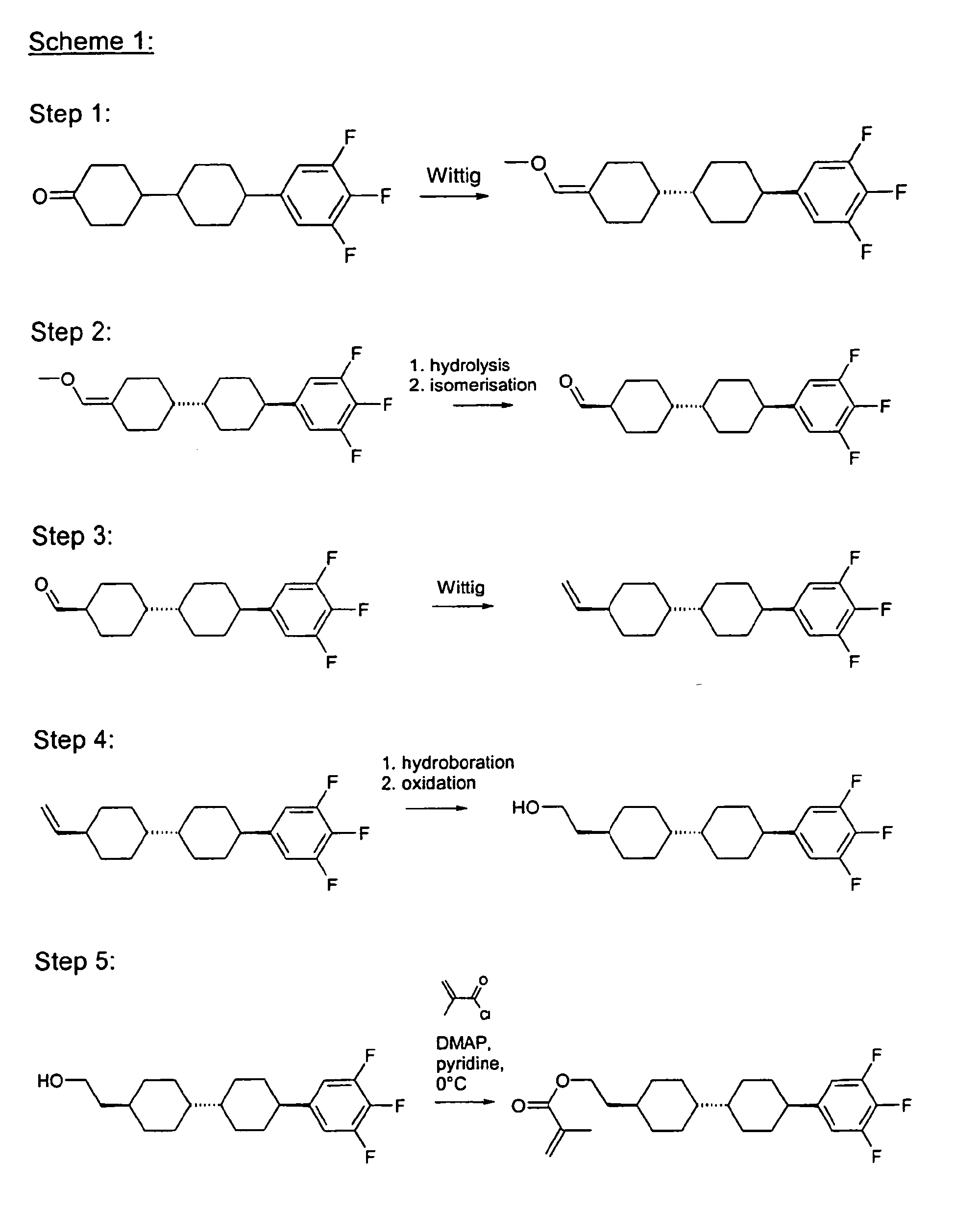

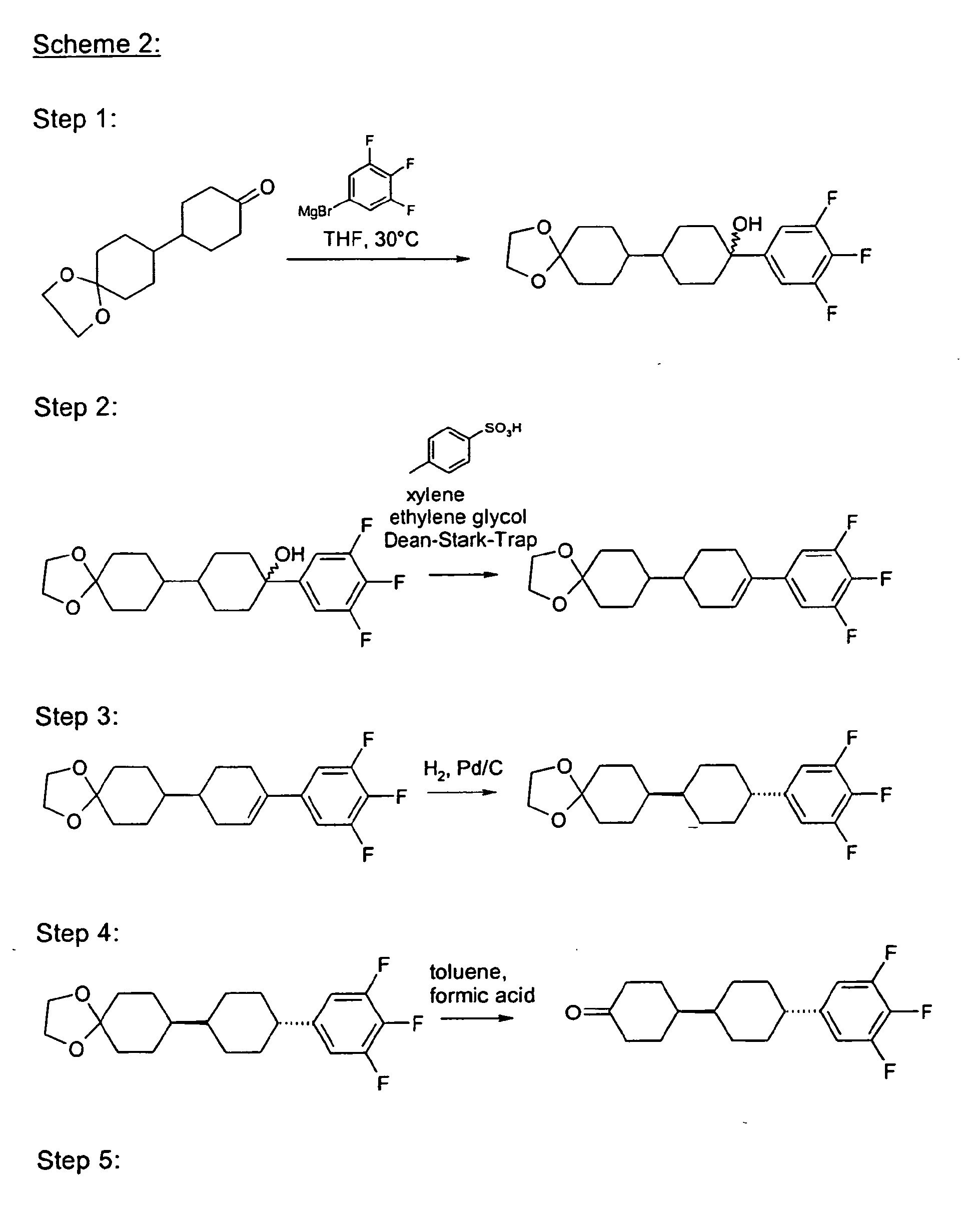

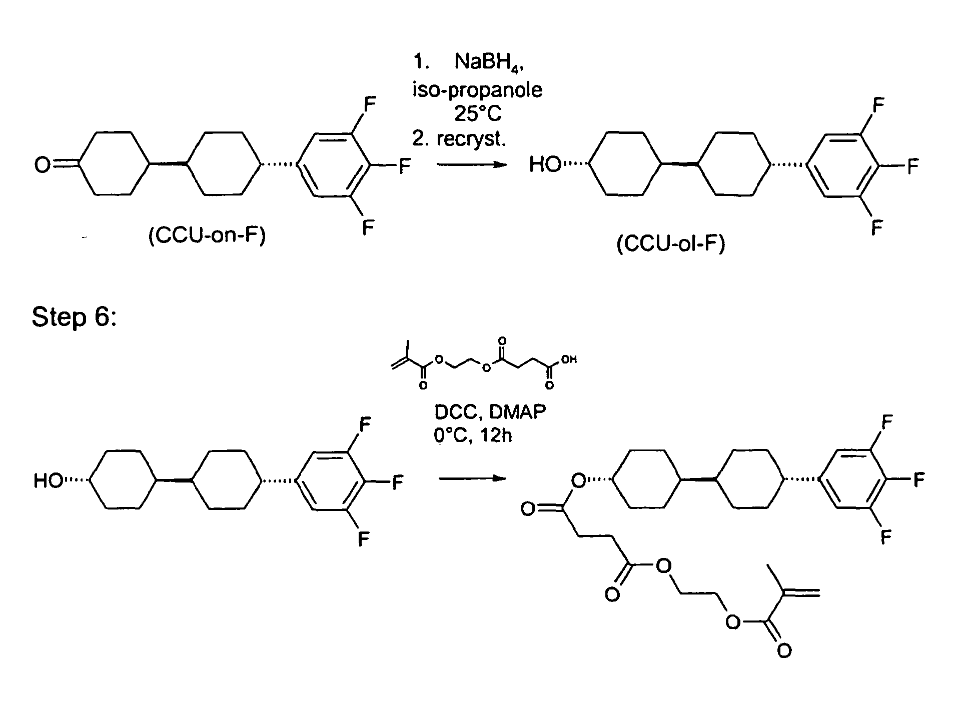

The compounds of formula I and polymerisable liquid crystal mixtures comprising them are useful for the preparation of anisotropic polymer films or coatings.

For the preparation of anisotropic polymer films, the liquid crystal mixture according to the present invention should comprise at least one polymerisable compound, which can be a compound of formula I or an additional polymerisable mesogenic or liquid crystalline compound.

In a preferred embodiment of the present invention the polymerisable material comprises at least one di- or multireactive achiral polymerisable mesogenic compound and at least one monoreactive achiral polymerisable mesogenic compound.

In another preferred embodiment of the present invention the polymerisable material comprises at least two monoreactive achiral polymerisable mesogenic compounds.

In a preferred embodiment of the present invention the polymerisable material comprises at least one di- or multireactive chiral polymerisable mesogenic compound and at least one mono-, di- or multireactive achiral polymerisable mesogenic compound.

In another preferred embodiment of the present invention the polymerisable material comprises at least one monoreactive chiral polymerisable mesogenic compound and at least one mono-, di- or multireactive achiral polymerisable mesogenic compound.

In another preferred embodiment the polymerisable material comprises at least one non-reactive chiral compound and at least one mono-, di- or multireactive polymerisable mesogenic compound.

If di- or multireactive compounds are present in the polymerisable material, a three-dimensional polymer network is formed. An optical retardation film made of such a network is self-supporting and shows a high mechanical and thermal stability and a low temperature dependence of its physical and optical properties.

By varying the concentration of the di- and multireactive compounds the crosslink density of the polymer film and thereby its physical and chemical properties such as the glass transition temperature, which is also important for the temperature dependence of the optical properties of the optical retardation film, the thermal and mechanical stability or the solvent resistance can be tuned easily.

A preferred polymerisable LC mixture comprises
- 5 to 100 % of one or more compounds of formula I,
- 0 - 80 %, preferably 5 to 50 % of one or more direactive achiral mesogenic compounds,
- 5 - 80 %, preferably 5 to 70% of one or more monoreactive achiral mesogenic compounds,
- 0 - 80 %, preferably 5 to 50 % of one or more mono- or direactive chiral mesogenic compounds and/or 0 - 20 % of one or more non-reactive chiral compounds which may also be mesogenic,
- 0 to 15 %, preferably 0.1 to 10 %, very preferably 0.5 to 5 % of one or more photoinitiators,
- 0 to 10 % of one or more chain transfer agents,
- 0 to 3 % of one or more non-reactive, monoreactive, di- or multireactive surfactants.

Polymerisable mesogenic mono-, di- and multireactive compounds used for the present invention can be prepared by methods which are known per se and which are described, for example, in standard works of organic chemistry such as, for example, Houben-Weyl, Methoden der organischen Chemie, Thieme-Verlag, Stuttgart.

Examples of suitable polymerizable mesogenic compounds that can be used as monomers or comonomers in a polymerizable LC mixture according to the present invention are disclosed for example in WO 93/22397, EP 0 261 712, DE 195 04 224, WO 95/22586, WO 97/00600 and GB 2 351 734. The compounds disclosed in these documents, however, are to be regarded merely as examples that shall not limit the scope of this invention.

Examples of especially useful chiral and achiral polymerizable mesogenic compounds (reactive mesogens) are shown in the following lists which should, however, be taken only as illustrative and is in no way intended to restrict, but instead to explain the present invention:

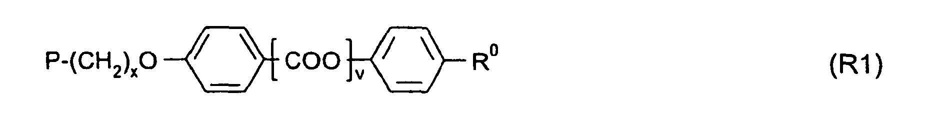

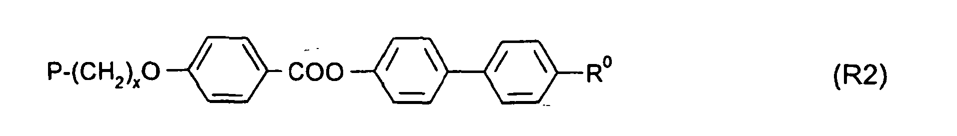

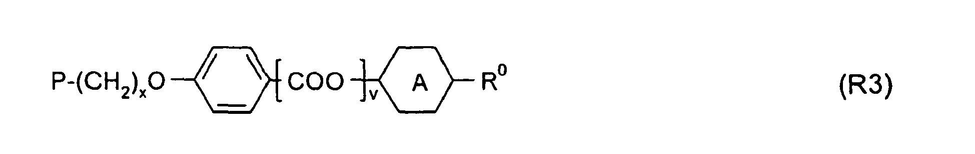

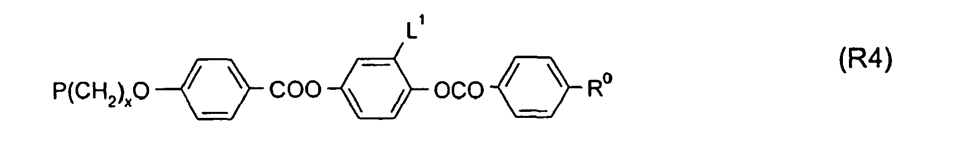

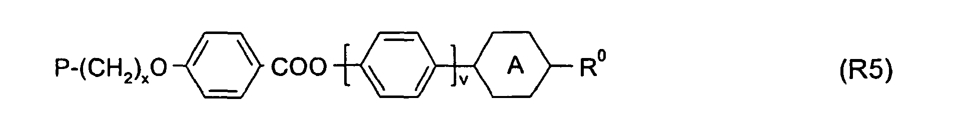

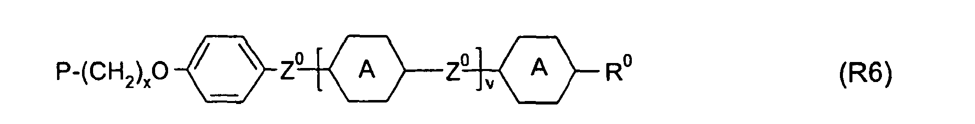

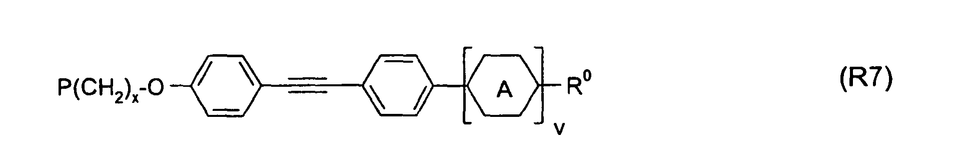

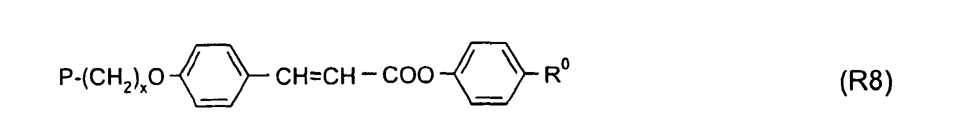

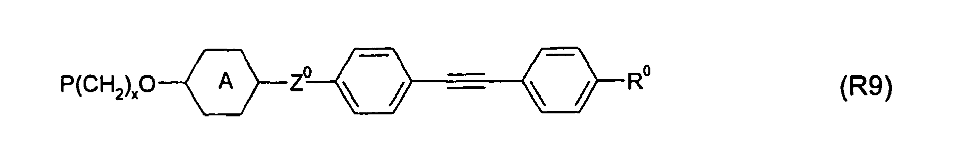

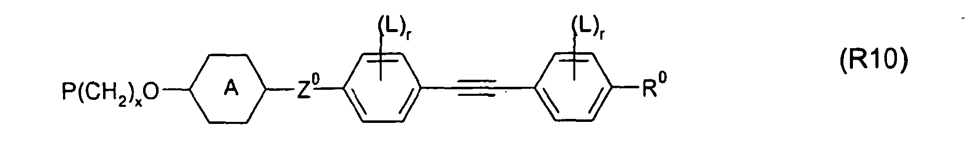

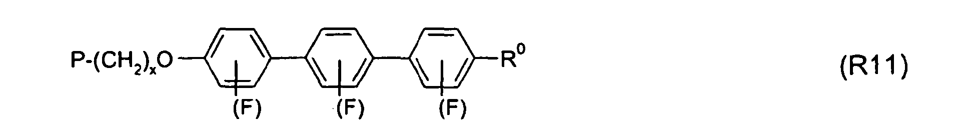

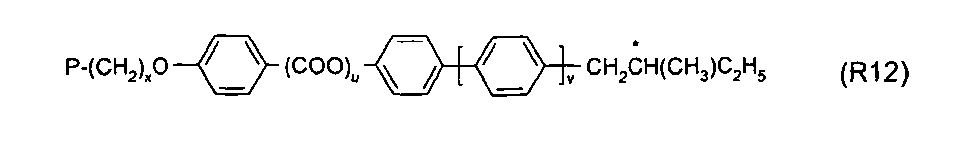

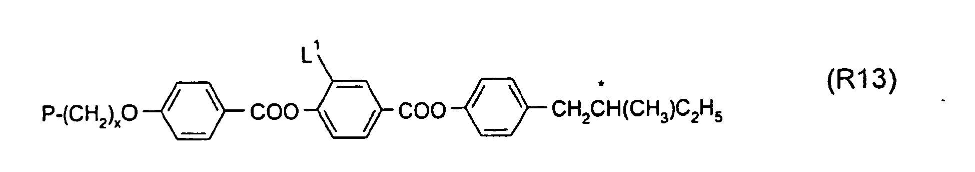

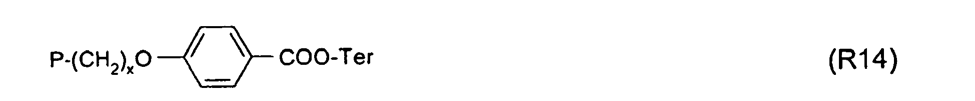

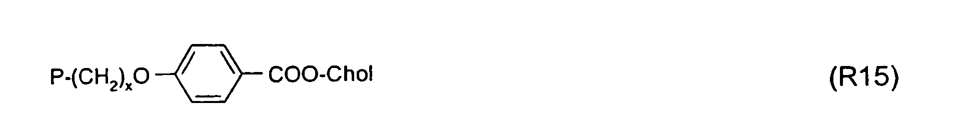

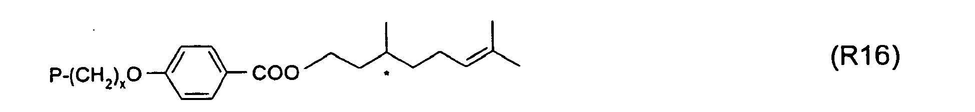

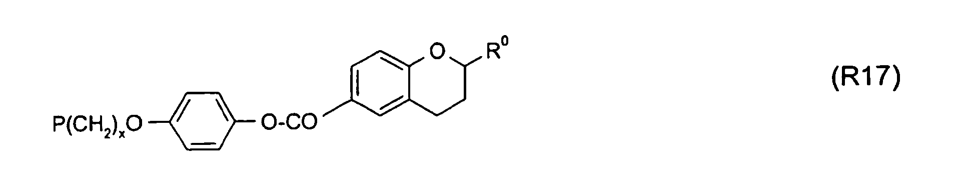

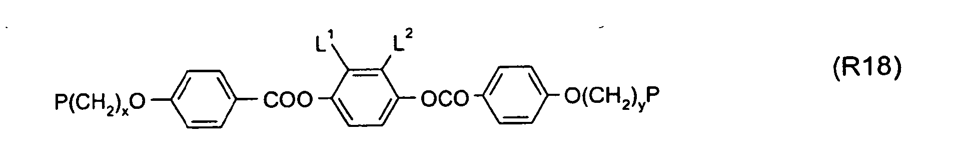

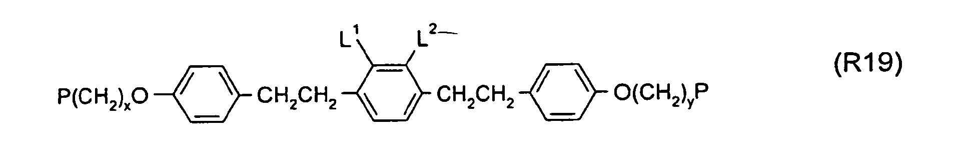

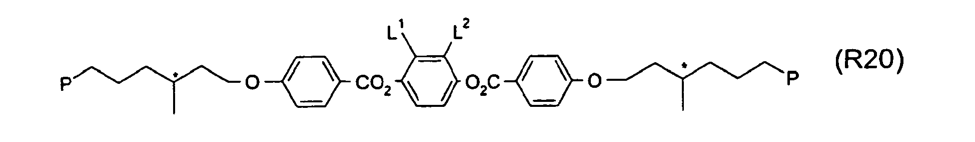

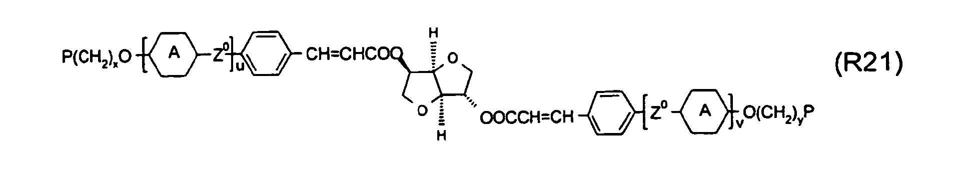

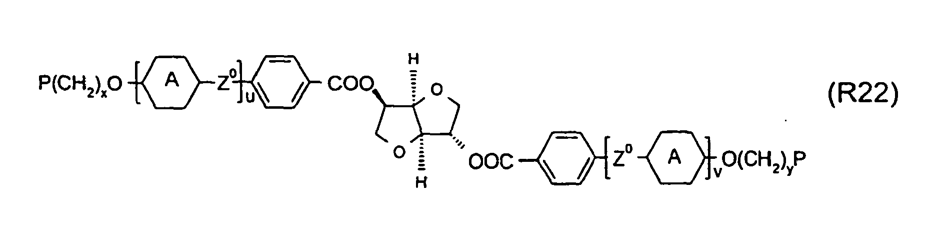

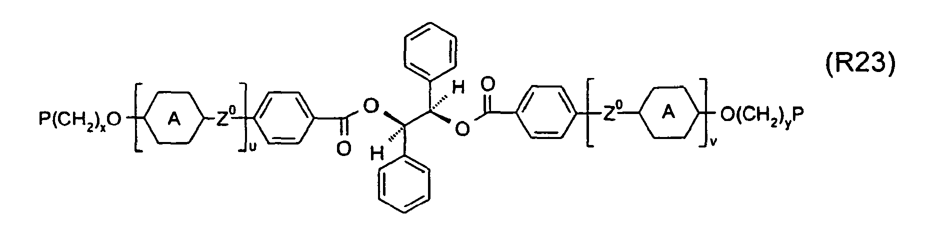

In the above formulae, P is a polymerisable group, preferably an acryl, methacryl, vinyl, vinyloxy, propenyl ether, epoxy, oxetane or styryl group, x and y are identical or different integers from 1 to 12 , A is 1,4-phenylene that is optionally mono-, di- or trisubstituted by L¹, or 1,4-cyclohexylene, u and v are independently of each other 0 or 1, Z° is -COO-, -OCO-, -CH₂CH₂-, -CH=CH-, -C≡C- or a single bond, R° is a polar group or an unpolar group, Ter is a terpenoid radical like e.g. menthyl, Chol is a cholesteryl group, L, L¹ and L² are independently of each other H, F, Cl, CN or an optionally halogenated alkyl, alkoxy, alkylcarbonyl, alkylcarbonyloxy, alkoxycarbonyl or alkoxycarbonyloxy group with 1 to 7 C atoms, and r is 0, 1, 2, 3 or 4. The phenyl rings in the above formulae are optionally substituted by 1, 2, 3 or 4 groups L.

The term 'polar group' in this connection means a group selected from F, Cl, CN, NO₂, OH, OCH₃, OCN, SCN, an optionally fluorinated alkycarbonyl, alkoxycarbonyl, alkylcarbonyloxy or alkoxycarbonyloxy group with up to 4 C atoms or a mono-, oligo- or polyfluorinated alkyl or alkoxy group with 1 to 4 C atoms. The term 'unpolar group' means an optionally halogenated alkyl, alkoxy, alkycarbonyl, alkoxycarbonyl, alkylcarbonyloxy or alkoxycarbonyloxy group with 1 or more, preferably 1 to 12 C atoms which is not covered by the above definition of 'polar group'.

Suitable chiral dopants can be selected e.g. from the commercially available R- or S-811, R- or S-1011, R- or S-2011, R- or S-3011, R-or S-4011, R- or S-5011, or CB 15 (from Merck KGaA, Darmstadt, Germany). Very preferred are chiral compounds with a high helical twisting power (HTP), in particular compounds comprising a sorbitol group as described in WO 98/00428, compounds comprising a hydrobenzoin group as described in GB 2,328,207, chiral binaphthyl derivatives as described in WO 02/94805, chiral binaphthol acetal derivatives as described in WO 02/34739, chiral TADDOL derivatives as described in WO 02/06265, and chiral compounds having at least one fluorinated linkage group and a terminal or central chiral group as described in WO 02/06196 and WO 02/06195.

For preparation of a polymer film, the polymerisable LC material is preferably coated onto substrate, aligned into a uniform orientation and polymerised to permanently fix the cholesteric structure. As a substrate for example a glass or quarz sheet or a plastic film or sheet can be used. It is also possible to put a second substrate on top of the coated mixture prior to and/or during and/or after polymerisation. The substrates can be removed after polymerisation or not. When using two substrates in case of curing by actinic radiation, at least one substrate has to be transmissive for the actinic radiation used for the polymerisation. Isotropic or birefringent substrates can be used. In case the substrate is not removed from the polymerized film after polymerisation, preferably isotropic substrates are used.

Preferably at least one substrate is a plastic substrate such as for example a film of polyester such as polyethyleneterephthalate (PET) or polyethylenenaphthalate (PEN), of polyvinylalcohol (PVA), polycarbonate (PC) or triacetylcellulose (TAC), especially preferably a PET film or a TAC film. As a birefringent substrate for example an uniaxially stretched plastic film can be used. For example PET films are commercially available from DuPont Teijin Films under the trade name Melinex ®.

The polymerisable material can also be dissolved in a solvent, preferably in an organic solvent. The solution is then coated onto the substrate, for example by spin-coating or other known techniques, and the solvent is evaporated off before polymerisation. In most cases it is suitable to heat the mixture in order to facilitate the evaporation of the solvent.

Polymerisation of the LC material is preferably achieved by exposing it to heat or actinic radiation. Actinic radiation means irradiation with light, like UV light, IR light or visible light, irradiation with X-rays or gamma rays or irradiation with high energy particles, such as ions or electrons. Preferably polymerisation is carried out by photoirradiation, in particular with UV light. As a source for actinic radiation for example a single UV lamp or a set of UV lamps can be used. When using a high lamp power the curing time can be reduced. Another possible source for photoradiation is a laser, like e.g. a UV laser, an IR laser or a visible laser.

Polymerisation is preferably carried out in the presence of an initiator absorbing at the wavelength of the actinic radiation. For example, when polymerising by means of UV light, a photoinitiator can be used that decomposes under UV irradiation to produce free radicals or ions that start the polymerisation reaction. UV photoinitiators are preferred, in particular radicalic UV photoinitiators.

Preferably the polymerisable mixture comprises one or more conventional or liquid crystal photoinitiators. As standard photoinitiator for radical polymerisation for example the commercially available Irgacure® 651, Irgacure® 184, Darocure® 1173 or Darocure® 4205 (all from Ciba Geigy AG) can be used, whereas in case of cationic photopolymerisation the commercially available UVI 6974 (Union Carbide) can be used. As LC photoinitiator for example one of the compounds disclosed in EP 03014990.0 or the following compound can be used:

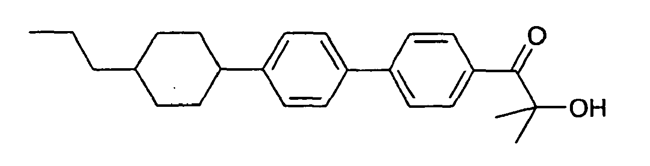

The curing time is dependent, inter alia, on the reactivity of the polymerisable material, the thickness of the coated layer, the type of polymerisation initiator and the power of the UV lamp. The curing time according to the invention is preferably not longer than 10 minutes, particularly preferably not longer than 5 minutes and very particularly preferably shorter than 2 minutes. For mass production short curing times of 3 minutes or less, very preferably of 1 minute or less, in particular of 30 seconds or less, are preferred.

The polymerisable LC material can additionally comprise one or more other suitable components such as, for example, catalysts, sensitizers, stabilizers, chain-transfer agents, inhibitors, accelerators, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes or pigments.

The mixture may also comprise one or more dyes having an absorption maximum adjusted to the wavelength of the radiation used for polymerisation, in particular UV dyes like e.g. 4,4'-azoxy anisole or the commercially available Tinuvin (from Ciba AG, Basel, Switzerland).

In another preferred embodiment the mixture of polymerisable material comprises up to 70%, preferably 1 to 50 % of one or more non-mesogenic compounds with one polymerisable functional group. Typical examples are alkylacrylates or alkylmethacrylates.

It is also possible, in order to increase crosslinking of the polymers, to add up to 20% of one or more non-mesogenic compounds with two or more polymerisable functional groups to the polymerisable LC material alternatively or in addition to the di- or multireactive polymerisable mesogenic compounds to increase crosslinking of the polymer. Typical examples for direactive non-mesogenic monomers are alkyldiacrylates or alkyldimethacrylates with alkyl groups of 1 to 20 C atoms. Typical examples for multireactive non-mesogenic monomers are trimethylpropanetrimethacrylate or pentaerythritoltetraacrylate.

It is also possible to add one or more chain transfer agents to the polymerisable material in order to modify the physical properties of the inventive polymer film. Especially preferred are thiol compounds, such as monofunctional thiol compounds like e.g. dodecane thiol or multifunctional thiol compounds like e.g. trimethylpropane tri(3-mercaptopropionate), very preferably mesogenic or liquid crystalline thiol compounds as for example disclosed in WO 96/12209, WO 96/25470 or US 6,420,001. When adding a chain transfer agent, the length of the free polymer chains and/or the length of the polymer chains between two crosslinks in the inventive polymer film can be controlled. When the amount of the chain transfer agent is increased, the polymer chain length in the obtained polymer film is decreasing.

When preparing a polymer film, it is usually necessary to achieve uniform alignment of the polymerisable material. For example, some uses require planar alignment, i.e. wherein in case of an achiral material the LC director is oriented parallel to the film plane, or in case of a cholesteric material the cholesteric helix axis is oriented substantially perpendicular to the film plane. Planar alignment can be achieved for example by shearing the material, e.g. by means of a doctor blade. It is also possible to apply an alignment layer, for example a layer of rubbed polyimide or sputtered SiOₓ, on top of at least one of the substrates. Planar alignment can also be achieved by rubbing the substrate without applying an additional alignment layer, e.g. by means of a rubbing cloth or a rubbing roller. Planar alignment with a low tilt angle can also be achieved by adding one or more surfactants to the polymerisable mesogenic material. Suitable surfactants are described for example in J. Cognard, Mol. Cryst. Liq. Cryst. 78, Supplement 1, 1-77 (1981). Particularly preferred are non-ionic surfactants, e.g. non-ionic fluorocarbon surfactants, like the commercially available Fluorad® (from 3M), or Zonyl FSN ® (from DuPont), or polymerizable surfactants as disclosed in EP 1 256 617 A1. Further preferred are multiblock surfactants as disclosed in GB 2 383 040 A.

In some cases it is of advantage to apply a second substrate to aid alignment and exclude oxygen that may inhibit the polymerisation. Alternatively the curing can be carried out under an atmosphere of inert gas. However, curing in air is also possible using suitable photoinitiators and high UV lamp power. When using a cationic photoinitiator oxygen exclusion most often is not needed, but water should be excluded. In a preferred embodiment of the invention the polymerisation of the polymerisable material is carried out under an atmosphere of inert gas, preferably under a nitrogen atmosphere.

Furthermore, the compounds of formula I are suitable as comonomers for liquid crystal materials with semiconductor or charge carrier properties, which can be used in electronic devices like for example field effect transistors (FET) as components of integrated circuitry, as thin film transistors in flat panel display applications or for Radio Frequency Identification (RFID) tags, or semiconducting components for organic light emitting diode (OLED) applications such as electroluminescent displays or backlights of e.g. liquid crystal displays, photovoltaic or sensor devices, photoconductors, or electrophotographic applications like electrophotographic recording devices.

For example, semiconductors comprising polymerisable liquid crystal compounds are disclosed in WO 00/79617, JP-A-2000-347432, JP-A-11-209761, Sirringhaus et al., Appl. Phys. Lett., 77(3) (2000) 406-408, and Grell et al., J. Korean Phys. Soc. 2000, 36(6), 331.
Electroluminescent devices using liquid crystal materials are described for example in WO 95/17018 and WO 95/04306. Organic photoconductors with liquid crystal properties are described for example in EP 0 563 768 and EP 0 527 376.

Another object of the invention is a liquid crystal mixture, in particular a nematic liquid crystal mixture, comprising at least one compound of formula I and one or more non-polymerisable liquid crystal compounds.

Yet another object of the invention is a liquid crystal display comprising a liquid crystal medium or mixture containing at least one compound of formula I.

For the applications described above the liquid crystal mixture preferably contains at least one compound of formula I, and a nematic host mixture comprising one or more nematic or nematogenic compounds.

Preferably the liquid crystal mixture consists of 2 to 25, preferably 3 to 15 compounds, at least one of which is a compound of formula I. The other compounds, forming the nematic host mixture, are preferably low molecular weight liquid crystal compounds selected from nematic or nematogenic substances, for example from the known classes of the azoxybenzenes, benzylidene-anilines, biphenyls, terphenyls, phenyl or cyclohexyl benzoates, phenyl or cyclohexyl esters of cyclohexanecarboxylic acid, phenyl or cyclohexyl esters of cyclohexylbenzoic acid, phenyl or cyclohexyl esters of cyclohexylcyclohexanecarboxylic acid, cyclohexylphenyl esters of benzoic acid, of cyclohexanecarboxylic acid and of cyclohexylcyclohexanecarboxylic acid, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclohexylpyridazines, phenyl- or cyclohexyldioxanes, phenyl- or cyclohexyl-1,3-dithianes, 1,2-diphenyl-ethanes, 1,2-dicyclohexylethanes, 1-phenyl-2-cyclohexylethanes, 1-cyclohexyl-2-(4-phenylcyclohexyl)-ethanes, 1-cyclohexyl-2-biphenyl-ethanes, 1-phenyl-2-cyclohexylphenylethanes, optionally halogenated stilbenes, benzyl phenyl ether, tolanes, substituted cinnamic acids and further classes of nematic or nematogenic substances. The 1,4-phenylene groups in these compounds may also be laterally mono- or difluorinated.

The liquid crystal mixture of this preferred embodiment is based on the achiral compounds of this type.

The most important compounds that are possible as components of these liquid crystal mixtures can be characterized by the following formula

R'-L'-G'-E-R"

wherein L' and E, which may be identical or different, are in each case, independently from one another, a bivalent radical from the group formed by -Phe-, -Cyc-, -Phe-Phe-, -Phe-Cyc-, -Cyc-Cyc-, -Pyr-, -Dio-, -B-Phe- and -B-Cyc- and their mirror images, where Phe is unsubstituted or fluorine-substituted 1,4-phenylene, Cyc is trans-1,4-cyclohexylene or 1,4-cyclohexenylene, Pyr is pyrimidine-2,5-diyl or pyridine-2,5-diyl, Dio is 1,3-dioxane-2,5-diyl and B is 2-(trans-1,4-cyclohexyl)ethyl, pyrimidine-2,5-diyl, pyridine-2,5-diyl or 1,3-dioxane-2,5-diyl.
G' in these compounds is selected from the following bivalent groups -CH=CH-, -N(O)N-, -CH=CY-, -CH=N(O)-, -C≡C-, -CH₂-CH₂-, -CO-O-, -CH₂-O-, -CO-S-, -CH₂-S-, -CH=N-, -COO-Phe-COO- or a single bond, with Y being halogen, preferably chlorine, or -CN.
R' and R" are, in each case, independently of one another, alkyl, alkenyl, alkoxy, alkenyloxy, alkanoyloxy, alkoxycarbonyl or alkoxycarbonyloxy with 1 to 18, preferably 3 to 12 C atoms, or alternatively one of R' and R" is F, CF₃, OCF₃, Cl, NCS or CN.

In most of these compounds R' and R" are, in each case, independently of each other, alkyl, alkenyl or alkoxy with different chain length, wherein the sum of C atoms in nematic media generally is between 2 and 9, preferably between 2 and 7.

Many of these compounds or mixtures thereof are commercially available. All of these compounds are either known or can be prepared by methods which are known per se, as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known per se, but are not mentioned here.

The compounds of formula I can be used in a liquid crystal mixture for displays like, for example, TN or STN displays, active matrix displays, displays of the IPS (in plane switching) or VA (vertically aligned) mode like VAN (vertically aligned nematic) or VAC (vertically aligned cholesteric), displays of the ECB (electrically controlled birefringence), DAP (deformation of aligned phases), CSH (colour super homeotropic) or ASM (axially symmetric microcell) mode, phase-change, guest-host, flexoelectric, ferroelectric displays, bistable nematic and cholesteric displays like PSCT (polymer stabilized cholesteric texture), or PDLC, polymer gel or polymer network displays.

In the foregoing and in the following examples, unless otherwise indicated, all temperatures are set forth uncorrected in degrees Celsius and all parts and percentages are by weight. The following abbreviations are used to illustrate the liquid crystalline phase behaviour of the compounds: G = glass transition; K = crystalline; N = nematic; S = smectic; Ch = cholesteric; I = isotropic. The numbers between the symbols indicate the phase transition temperatures in °C. Furthermore, mp. is the melting point, Δn is the optical anisotropy measured at 20°C and 589 nm, Δε is the dielectric anisotropy at 20°C and 1 kHz, DCC is N,N'-dicyclohexylcarbodiimide, DMAP is 4-dimethylaminopyridine.

### Example 1

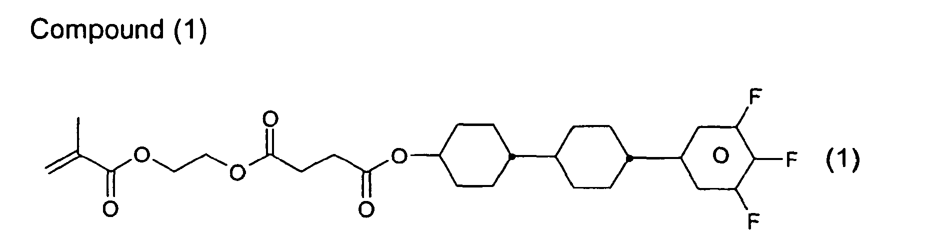

is prepared as follows:

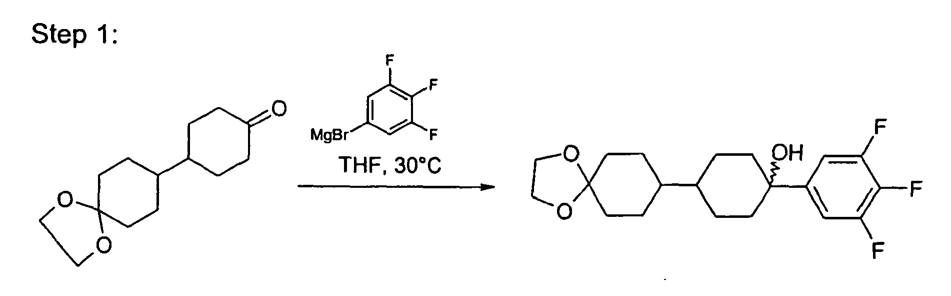

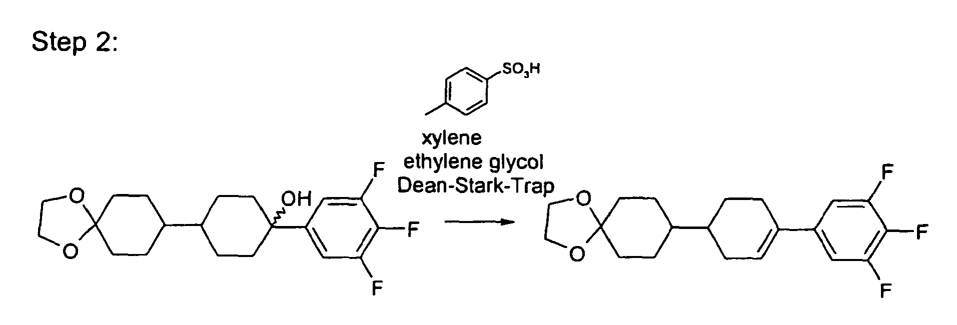

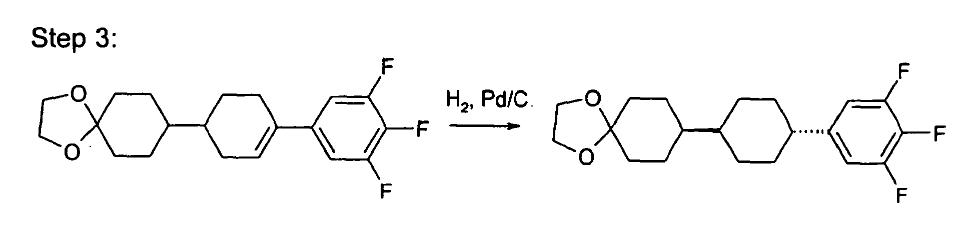

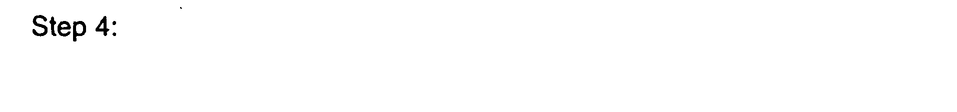

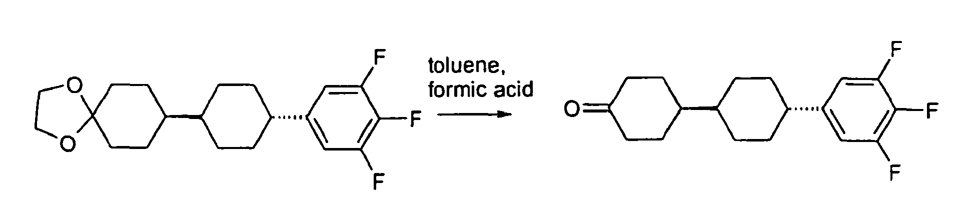

Steps 1-4 have been described in the literature. 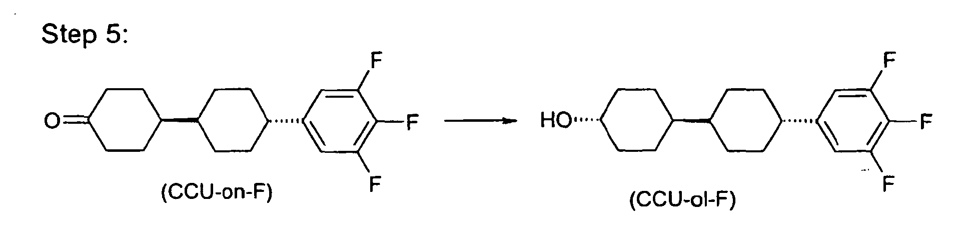 36.6 g CCU-on-F (98% trans), 44.1 g cer(III)chlorid heptahydrate (99.9%, Aldrich) are dissolved in 300 ml methanol and 150 ml THF. At 0-10°C 2.081 g solid NaBH₄ (96%, Merck) is added portionwise. After the reaction is finished (5-20 min, DC-control) the mixture is quenched with 70 ml aq. ammonium chloride solution and 300 ml toluene are added. The mixture is filtered, the organic phase separated and the aqueous phase extracted with 100 ml toluene 3 times. The org. phases are dried, the solvent is evaporated and the residue recrystallized from heptane/toluene to give 32.6 g of a white solid (98.1% all-trans).

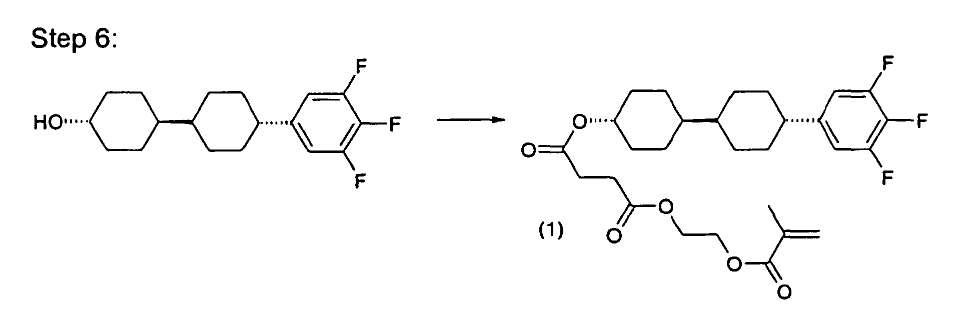

In a 500 ml four-neck flask 7.48 g DCC in 50 ml dichloromethane are added under a nitrogen atmosphere to a solution of 10.0 g CCU-ol-F, 117 mg DMAP and 7.36 g succinic acid mono-[2-(2-methylacryloyloxy)-ethyl]-ester in 250 ml dichloromethane and 80 ml toluene at 5°C. After stirring for 15 h at RT the reaction mixture is filtered, the solid washed with dichloromethane and the solvent evaporated off. After purification by column chromatography with heptane/ethyl acetate (3:1) 13.2 g (99.5%) of (1) are obtained as a white solid.

### Compound (1) has the following properties:

G -37 K 70 I; Δε +4.9; Δn 0.0731

The following compounds are obtained analogously:

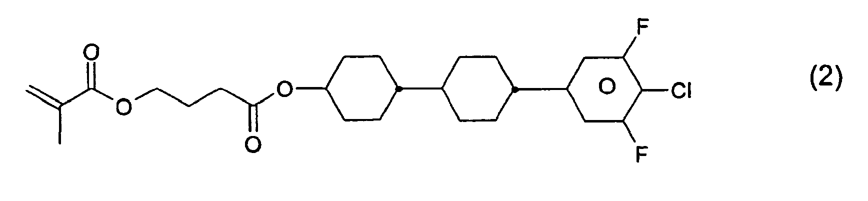

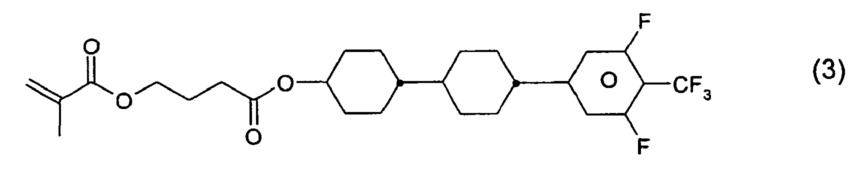

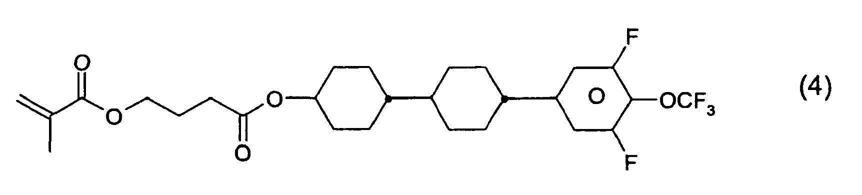

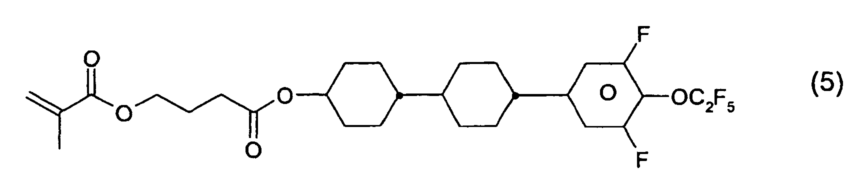

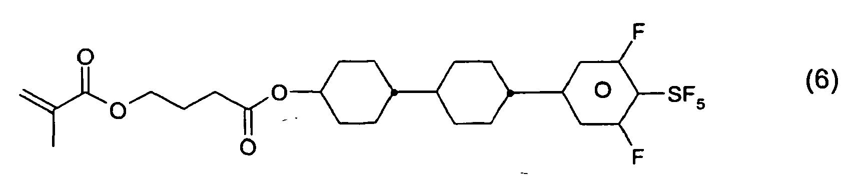

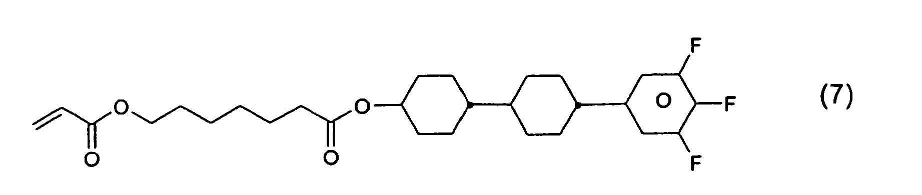

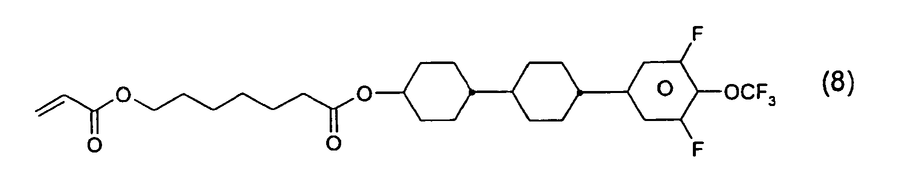

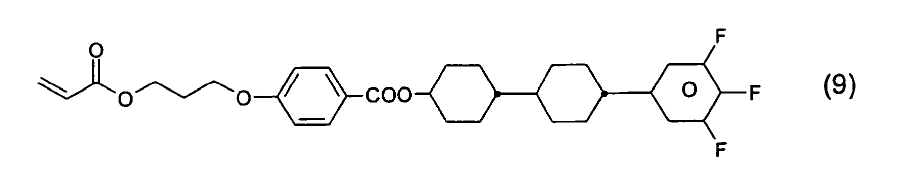

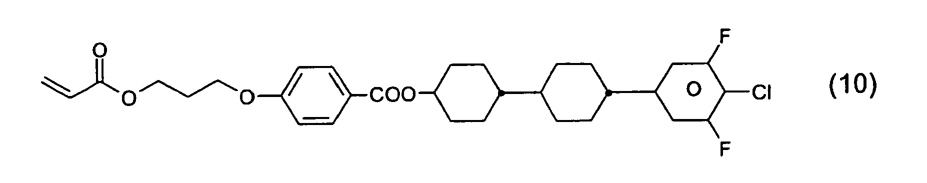

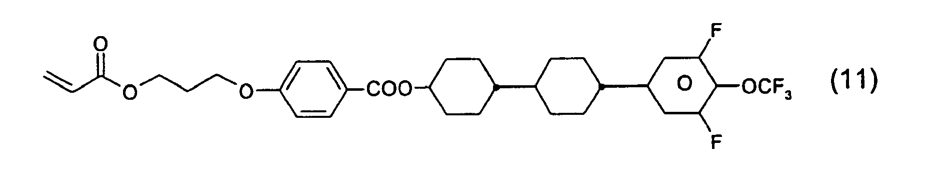

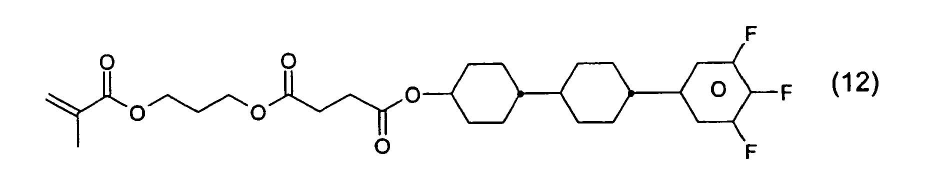

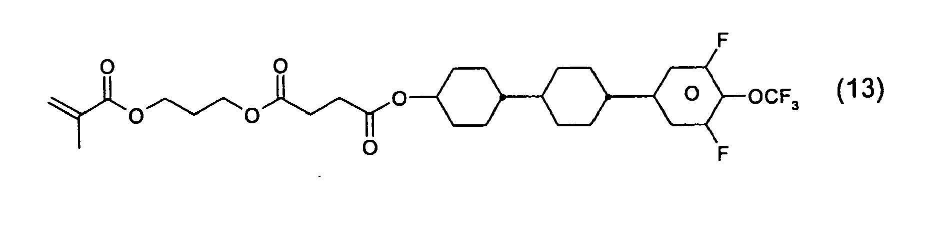

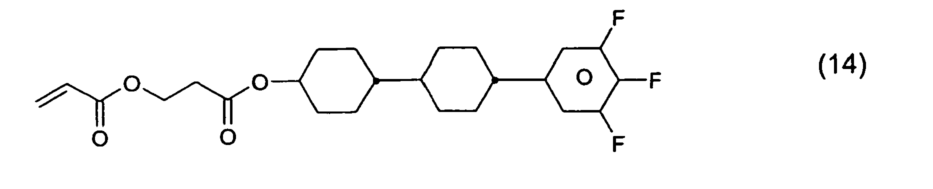

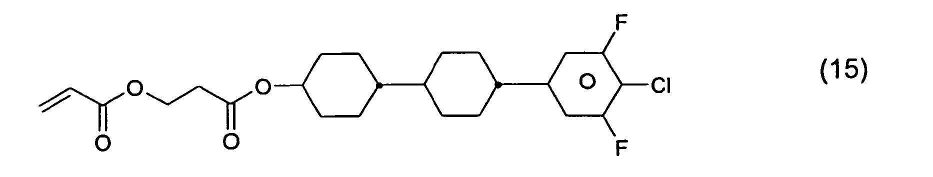

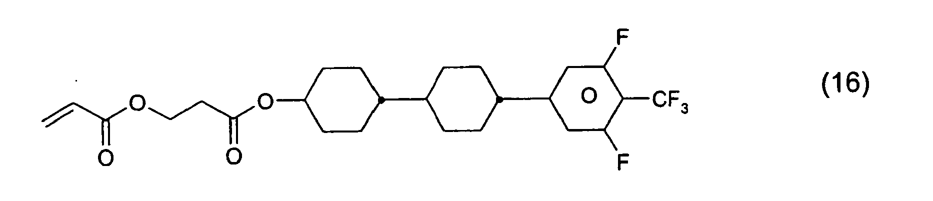

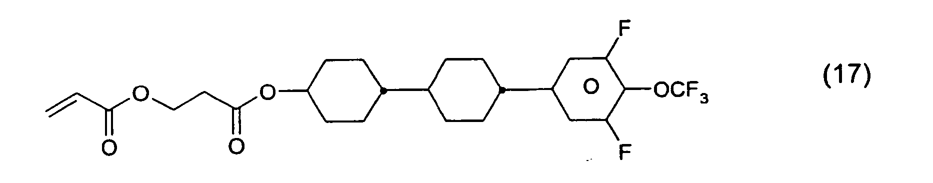

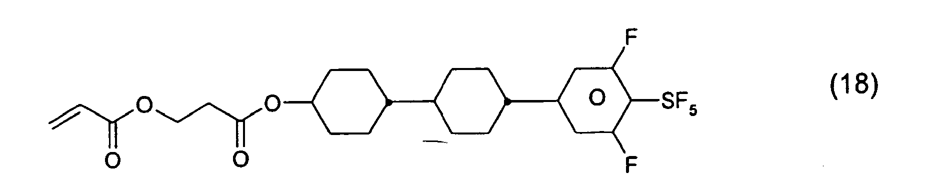

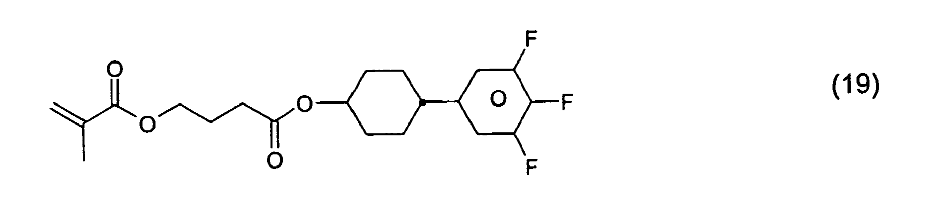

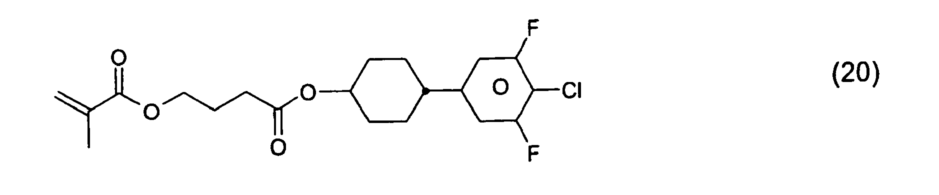

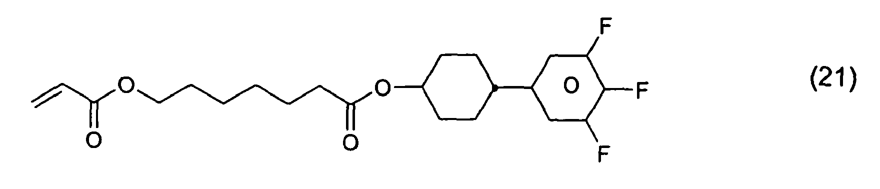

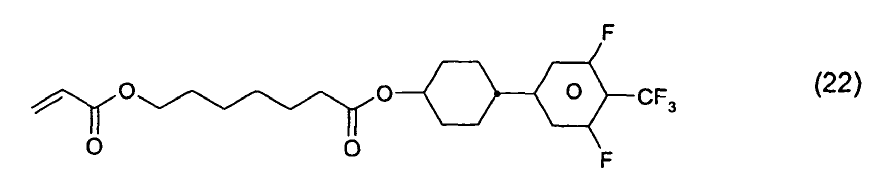

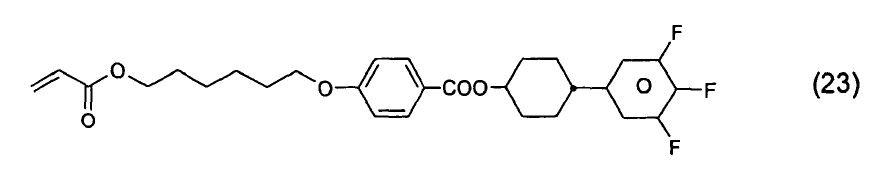

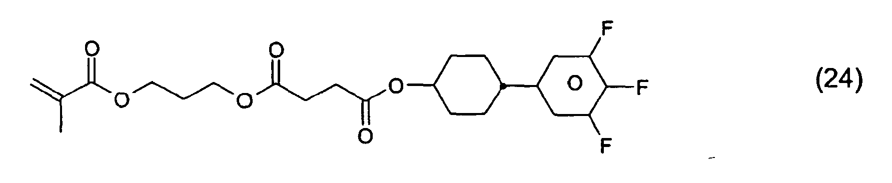

## Claims

1. Compounds of formula I 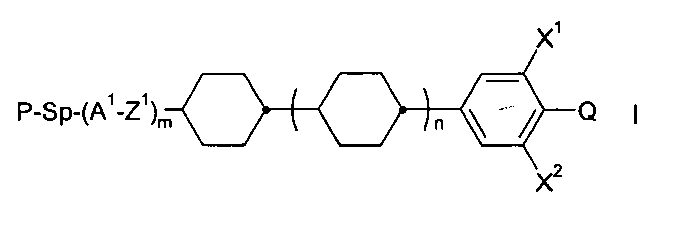 wherein
P is a polymerisable group selected from CH₂=CW¹- 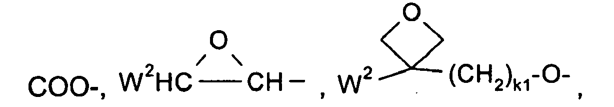 CH₂=CW²-O-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- and W⁴W⁵W⁶Si-, with W¹ being H, Cl, CN, phenyl or alkyl with 1 to 5 C-atoms, in particular H, Cl or CH₃, W² and W³ being independently of each other H or alkyl with 1 to 5 C-atoms, in particular methyl, ethyl or n-propyl, W⁴, W⁵ and W⁶ being independently of each other Cl, oxaalkyl or oxacarbonylalkyl with 1 to 5 C-atoms, Phe being 1,4-phenylene that is optionally substituted by one or more groups L as defined above, and k₁ and k₂ being independently of each other 0 or 1.
Sp is a spacer group,
A¹ is in case of multiple occurrence independently of one another an aromatic or aliphatic 5- or 6-ring, or a group comprising two or three fused aromatic or aliphatic 5- or 6-rings, these rings optionally containing one or more hetero atoms selected from N, O and S, and optionally being mono- or polysubstituted,
Z¹ is in case of multiple occurrence independently of one another -O-, -S-, -CO-, -COO-, -OCO-, -S-CO-, -CO-S-, -O-CO-O-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CR°-, -CH=CH-, -CH=CF-, -CY¹=CY¹-, -C≡C-, -CH=CH-COO-, -OCO-CH=CH- or a single bond,
R° and R°° are independently of each other H or alkyl with 1 to 12 C-atoms,
Y¹ and Y² are independently of each other H, F, Cl or CN,
Q is F, Cl or fluorinated alkyl, alkoxy, alkenyl or alkenyl-oxy with 1 to 6 C-atoms,
X¹ and X² are independently of each other H or F,
m is 0, 1 or 2, and
n is 0 or 1.

2. Compounds according to claim 1, **characterized in that** n is 1 and m is 0.

3. Compounds according to at least one of the preceding claims, **characterized in that** Q is F, Cl, CF₃, OCF₃, OCHF₂ or OC₂F₅.

4. Compounds according to at least one of the preceding claims, **characterized in that** X¹ and/or X² is F.

5. Compounds according to at least one of the preceding claims, **characterized in that** Sp is alkylene with 1 to 20 C atoms which is optionally mono- or polysubstituted by F and wherein one or more non-adjacent CH₂ groups are replaced, in each case independently from one another, by -CO-, -O-CO-, -CO-O-, -O-CO-O-, -NR⁰-CO-O-, -O-CO-NR⁰-, -NR⁰-CO-NR⁰- in such a manner that O-atoms are not directly linked to one another, wherein R° is as defined in formula I.

6. Compounds according to at least one of the preceding claims, selected from the following formulae 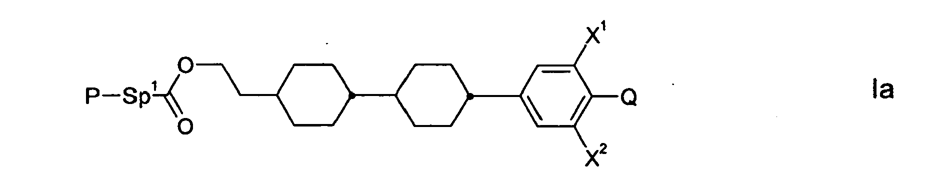 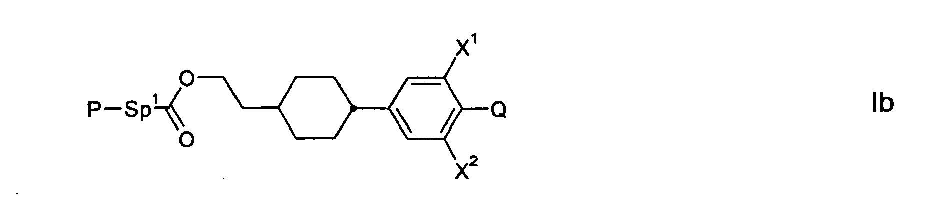 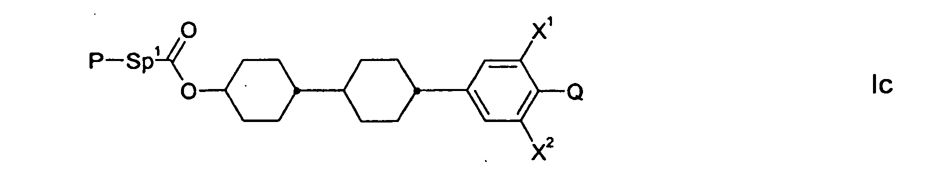 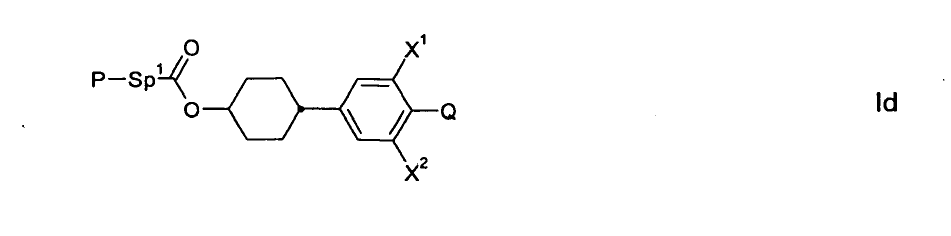 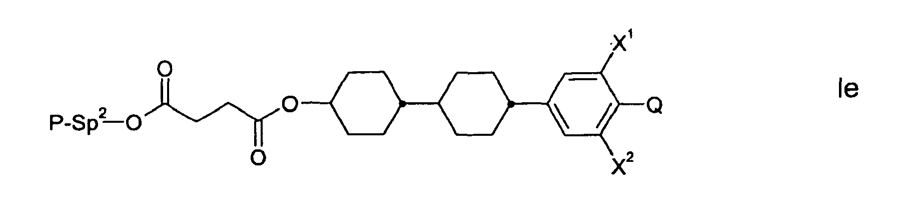 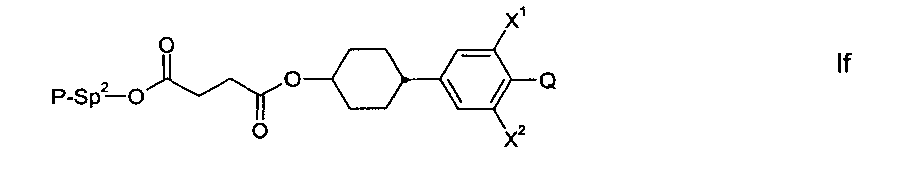 wherein P, X¹, X² and Q are as defined in formula I, Sp¹ is alkylene with 1 to 20 C atoms which is optionally mono- or polysubstituted by F, Cl, Br, I or CN, and wherein one or more non-adjacent CH₂ groups are optionally replaced, in each case independently from one another, by -O-, -S-, -NH-, -NR⁰-, -SiR⁰R⁰⁰-, -CO-, -COO-, -OCO-, -OCO-O-, -S-CO-, -CO-S-, -NR⁰-CO-O-, -O-CO-NR⁰-, -NR⁰-CO-NR⁰-, -CH=CH- or -C≡C- in such a manner that O and/or S atoms are not linked directly to one another, wherein R° is as defined in formula I, and Sp² is alkylene with 1 to 12 C-atoms.

7. Compounds according to at least one of the preceding claims, selected from the following formulae 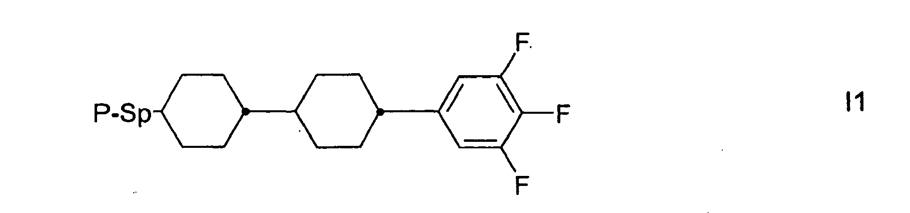 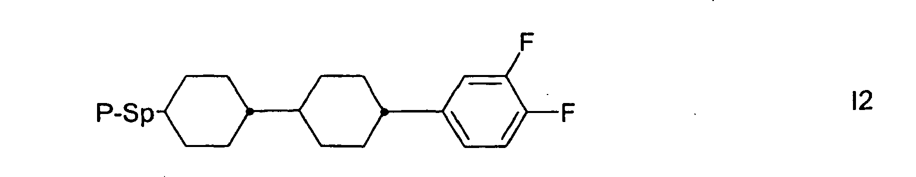 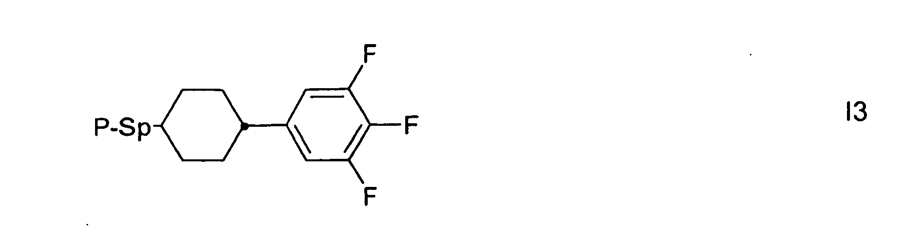 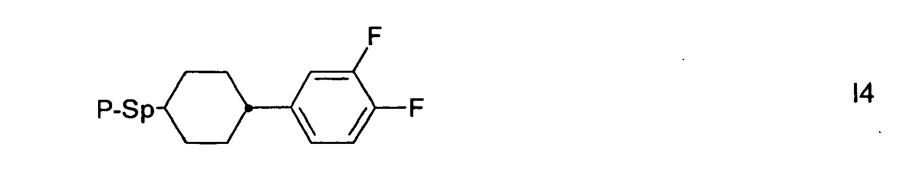 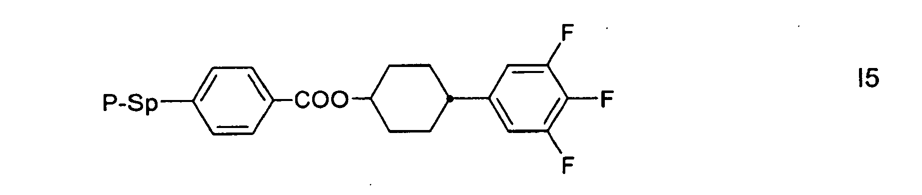 wherein P and Sp have the meanings of formula I.

8. Liquid crystal material comprising at least one compound according to at least one of claims 1 to 7 and at least one or more non-polymerisable liquid crystal compounds.

9. Polymerisable liquid crystal material comprising at least one compound according to at least one of claims 1 to 7.

10. Anisotropic polymer or polymer film obtained from a polymerisable liquid crystal material according to claim 9.

11. Use of a compound, polymerisable liquid crystal material, polymer or polymer film according to at least one of claims 1 to 10 in optical films, polarisers, compensators, beam splitters, reflective films, alignment layers, colour filters, holographic elements, hot stamping foils, coloured images, decorative or security markings, liquid crystal pigments, adhesives, synthetic resins with anisotropic mechanical properties, cosmetics, diagnostics, nonlinear optics, optical information storage, as chiral dopants, in electronic devices like for example field effect transistors (FET) as components of integrated circuitry, as thin film transistors in flat panel display applications or for Radio Frequency Identification (RFID) tags, or in semiconducting components for organic light emitting diode (OLED) applications such as electroluminescent displays or backlights of e.g. liquid crystal displays, for photovoltaic or sensor devices, as electrode materials in batteries, as photoconductors, or for electrophotographic applications like electrophotographic recording.

## Patentansprüche

1. Verbindungen der Formel I 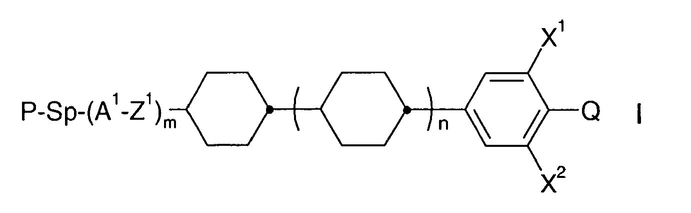 worin
P eine polymerisierbare Gruppe ausgewählt aus 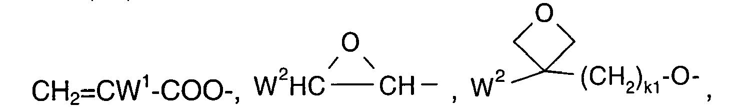 CH₂=CW²-O-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁Phe-(O)ₖ₂-, Phe-CH=CH-, HOOC-, OCN- und W⁴W⁵W⁶Si-bedeutet, wobei W¹ H, Cl, CN, Phenyl oder Alkyl mit 1 bis 5 C-Atomen, insbesondere H, Cl oder CH₃, bedeutet, W² und W³ unabhängig voneinander H oder Alkyl mit 1 bis 5 C-Atomen, insbesondere Methyl, Ethyl oder n-Propyl, bedeuten, W⁴, W⁵ und W⁶ unabhängig voneinander Cl, Oxaalkyl oder Oxacarbonylalkyl mit 1 bis 5 C-Atomen bedeuten, Phe 1,4-Phenylen bedeutet, das gegebenenfalls durch eine oder mehrere Gruppen L wie oben definiert substituiert ist, und k₁ und k₂ unabhängig voneinander 0 oder 1 bedeuten,
Sp eine Spacergruppe bedeutet,
A¹ bei mehrfachem Auftreten unabhängig voneinander einen aromatischen oder aliphatischen 5- oder 6-Ring oder eine Gruppe mit zwei oder drei anellierten aromatischen oder aliphatischen 5- oder 6- Ringen bedeutet, wobei diese Ringe gegebenenfalls ein oder mehrere Heteroatome ausgewählt aus N, O und S enthalten und gegebenenfalls ein- oder mehrfach substituiert sind,
Z¹ bei mehrfachem Auftreten unabhängig voneinander -O-, -S-, -CO-, -COO-, -OCO-, -S-CO-, -CO-S-, -O- CO-O-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CR⁰-, -CH=CH-, -CH=CF-, -CY¹=CY¹-, -C≡C-, -CH=CH-COO-, -OCO-CH=CH- oder eine Einfachbindung bedeutet,
R° und R⁰⁰ unabhängig voneinander H oder Alkyl mit 1 bis 12 C-Atomen bedeuten,
Y¹ und Y² unabhängig voneinander H, F, Cl oder CN bedeuten,
Q F, Cl oder fluoriertes Alkyl, Alkoxy, Alkenyl oder Alkenyl-oxy mit 1 bis 6 C-Atomen bedeutet,
X¹ und X² unabhängig voneinander H oder F bedeuten,
m 0, 1 oder 2 bedeutet und
n 0 oder 1 bedeutet.

2. Verbindungen nach Anspruch 1, **dadurch gekennzeichnet, dass** n 1 und m 0 bedeutet.

3. Verbindungen nach mindestens einem der vorhergehenden Ansprüche, **dadurch gekennzeichnet, dass** Q F, Cl, CF₃, OCF₃, OCHF₂ oder OC₂F₅ bedeutet.

4. Verbindungen nach mindestens einem der vorhergehenden Ansprüche, **dadurch gekennzeichnet, dass** X¹ und/oder X² F bedeutet.

5. Verbindungen nach mindestens einem der vorhergehenden Ansprüche, **dadurch gekennzeichnet, dass** Sp Alkylen mit 1 bis 20 C-Atomen bedeutet, das gegebenenfalls ein- oder mehrfach durch F substituiert ist und worin eine oder mehrere nicht benachbarte CH₂-Gruppen jeweils unabhängig voneinander so durch -CO-, -O-CO-, -CO-O-, -O-CO-O-, -NR⁰-CO-O-, -O-CO-NR⁰-, -NR°-CO-NR°- ersetzt sind, dass O-Atome nicht direkt miteinander verknüpft sind, worin R° wie in Formel I definiert ist.

6. Verbindungen nach mindestens einem der vorhergehenden Ansprüche, ausgewählt aus den folgenden Formeln 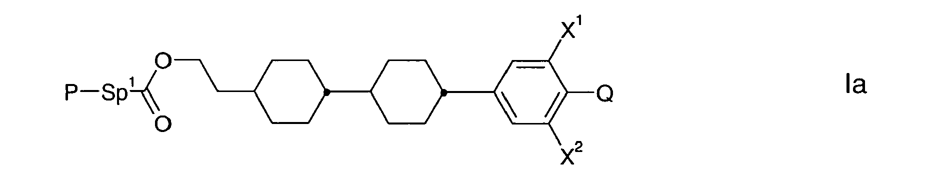 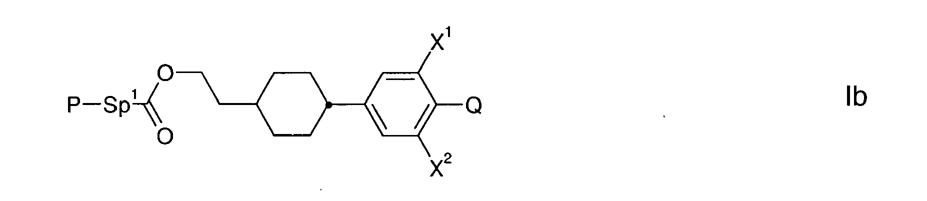 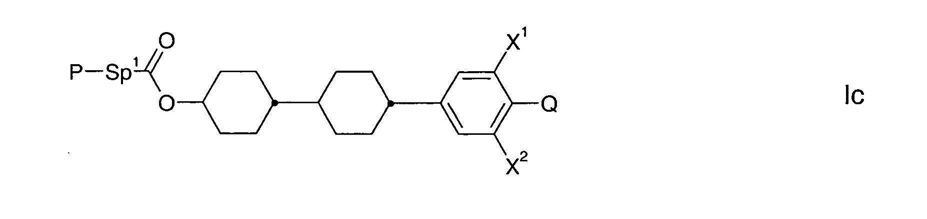 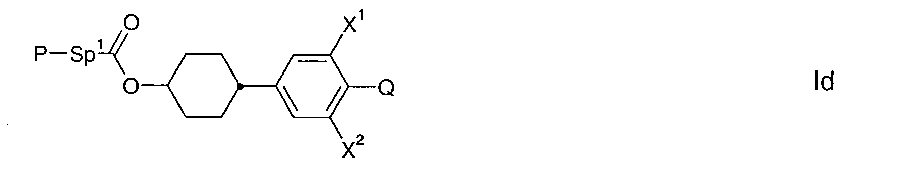 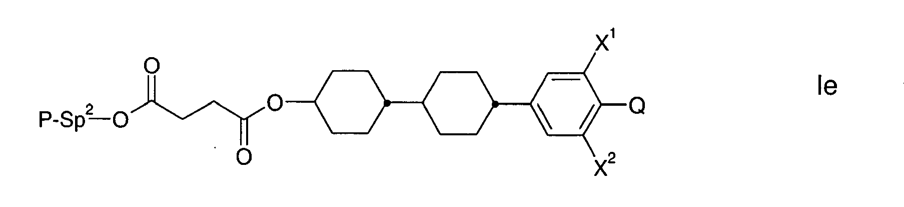 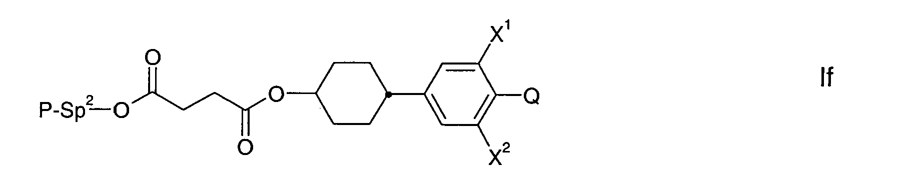 worin P, X¹, X² und Q wie in Formel I definiert sind, Sp¹ Alkylen mit 1 bis 20 C-Atomen bedeutet, das gegebenenfalls ein- oder mehrfach durch F, Cl, Br, I oder CN substituiert ist und worin gegebenenfalls eine oder mehrere nicht benachbarte CH₂-Gruppen jeweils unabhängig voneinander so durch -O-, -S-, -NH-, -NR°-, -SiR⁰R⁰⁰-, -CO-, -COO-, -OCO-, -OCO-O-, -S-CO-, -CO-S-, -NR⁰-CO-O-, -O-CO-NR⁰-, -NR⁰-CO-NR⁰-, -CH=CH-oder -C≡C- ersetzt sind, dass O- und/oder S-Atome nicht direkt miteinander verknüpft sind, worin R° wie in Formel I definiert ist, und Sp² Alkylen mit 1 bis 12 C-Atomen bedeutet.

7. Verbindungen nach mindestens einem der vorhergehenden Ansprüche, ausgewählt aus den folgenden Formeln 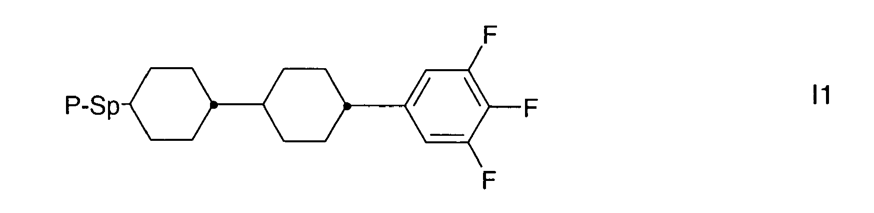 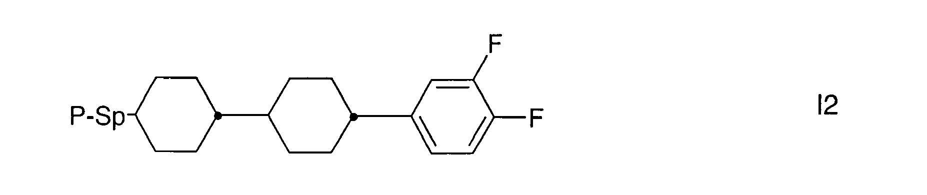 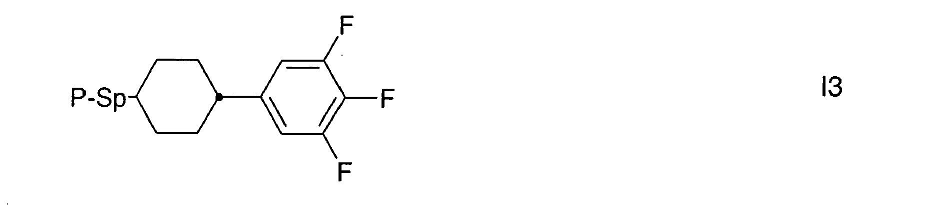 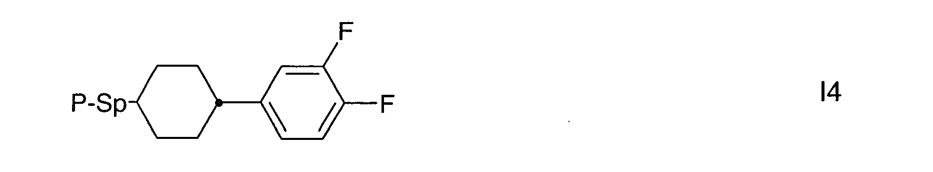 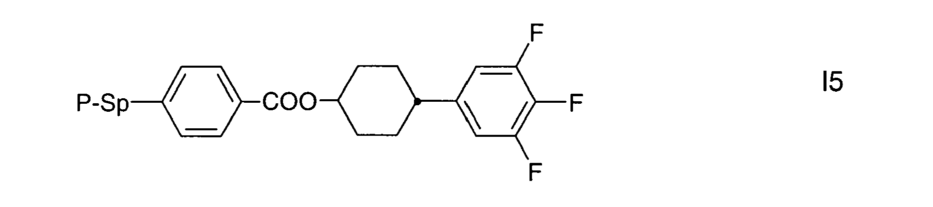 worin P und Sp die Bedeutungen der Formel I besitzen.

8. Flüssigkristallmaterial enthaltend mindestens eine Verbindung nach mindestens einem der Ansprüche 1 bis 7 und mindestens eine oder mehrere nicht polymerisierbare Flüssigkristallverbindungen.

9. Polymerisierbares Flüssigkristallmaterial enthaltend mindestens eine Verbindung nach mindestens einem der Ansprüche 1 bis 7.

10. Anisotropes Polymer oder anisotrope Polymerfolie erhalten aus einem polymerisierbaren Flüssigkristallmaterial nach Anspruch 9.

11. Verwendung einer Verbindung, eines polymerisierbaren Flüssigkristallmaterials, eines Polymers oder einer Polymerfolie nach mindestens einem der Ansprüche 1 bis 10 in optischen Folien, Polarisatoren, Kompensatoren, Strahlteilern, reflexiven Folien, Orientierungsschichten, Farbfiltern, holographischen Elementen, Heißprägefolien, farbigen Abbildungen, dekorativen oder Sicherheitsmarkierungen, Flüssigkristallpigmenten, Klebstoffen, Kunstharzen mit anisotropen mechanischen Eigenschaften, Kosmetika, Diagnostika, in der nonlinearen Optik, optischen Datenspeicherung, als chirale Dotierstoffe, in elektronischen Vorrichtungen wie z.B. Feldeffekttransistoren (FET) als Bauteile integrierter Schaltungen, als Dünnschichttransistoren in Flachbildschirmanwendungen oder für RFID-Tags (Radio Frequency Identification), oder in Halbleiterbauteilen für Anwendungen in organischen Leuchtdioden (OLED) wie Elektrolumineszenzanzeigen oder Hintergrundbeleuchtungen von z.B. Flüssigkristallanzeigen, für photovoltaische oder Sensorvorrichtungen, als Elektrodenmaterialien in Batterien, als Photoleiter oder für elektrophotographische Anwendungen wie elektrophotographische Aufzeichnung.

## Revendications

1. Composés de formule I 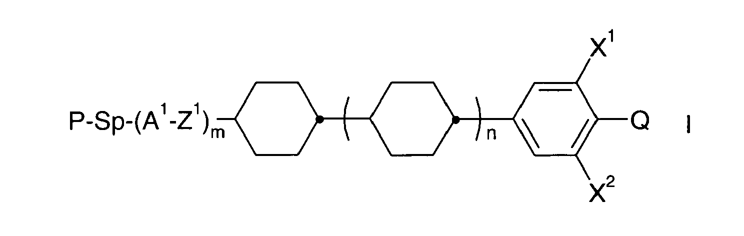 dans laquelle
P est un groupe polymérisable choisi parmi CH₂=CW¹- 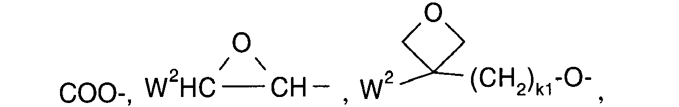 CH₂=CW²-O-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- et W⁴W⁵W⁶Si-, W¹ étant H, CI, CN, phényle ou alkyle comportant de 1 à 5 atomes de C, en particulier H, Cl ou CH₃, W² et W³ étant, indépendamment l'un de l'autre, H ou alkyle comportant de 1 à 5 atomes de C, en particulier méthyle, éthyle ou n-propyle, W⁴, W⁵ et W⁶ étant, indépendamment les uns des autres, CI, oxaalkyle ou oxacarbonylalkyle comportant de 1 à 5 atomes de C, Phe étant 1,4-phénylène qui est en option substitué par un ou plusieurs groupes L comme défini ci avant, et k₁ et k₂ étant, indépendamment l'un de l'autre, 0 ou 1,
Sp est un groupe d'espaceur,
A¹ est, dans le cas d'une occurrence multiple de manière indépendante les unes des autres, un 5- ou 6-cycle aromatique ou aliphatique, ou un groupe comprenant deux ou trois 5- ou 6-cycles aromatiques ou aliphatiques fusionnés, ces cycles contenant en option un ou plusieurs hétéroatomes choisis parmi N, O et S, et étant en option mono- ou polysubstitués,
Z¹ est, dans le cas d'une occurrence multiple de manière indépendante les unes des autres, -O-, -S-, -CO-, -COO-, -OCO-, -S-CO-, -CO-S-, -O-CO-O-, -CO-NR⁰-, -NR⁰-CO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CR⁰-, -CH=CH-, -CH=CF-, -CY¹=CY¹-, -C≡C-, -CH=CH-COO-, -OCO-CH=CH- ou une liaison simple,
R° et R°° sont, indépendamment l'un de l'autre, H ou alkyle avec de 1 à 12 atomes de C,
Y¹ et Y² sont, indépendamment l'un de l'autre, H, F, Cl ou CN,
Q est F, Cl ou alkyle, alcoxy, alkényle ou alkényloxy fluoré avec de 1 à 6 atomes de C,
X¹ et X² sont, indépendamment l'un de l'autre, H ou F,
m est 0, 1 ou 2, et
n est 0 ou 1.

2. Composés selon la revendication 1, **caractérisés en ce que** n est 1 et m est 0.

3. Composés selon au moins l'une des revendications précédentes, **caractérisés en ce que** Q est F, CI, CF₃, OCF₃, OCHF₂ ou OC₂F₅.

4. Composés selon au moins l'une des revendications précédentes, **caractérisés en ce que** X¹ et/ou X² est F.

5. Composés selon au moins l'une des revendications précédentes, **caractérisés en ce que** Sp est alkylène avec de 1 à 20 atomes de C qui est en option mono- ou polysubstitué par F et où un ou plusieurs groupes CH₂ non adjacents sont remplacés, dans chaque cas indépendamment les uns des autres, par -CO-, -O-CO-, -CO-O-, -O-CO-O-, -NR⁰-CO-O-, -O-CO-NR⁰-, -NR°-CO-NR°- de telle sorte que des atomes de O ne soient pas liés directement les uns aux autres, où R° est tel que défini dans la formule I.

6. Composés selon au moins l'une des revendications précédentes, choisis parmi les formules qui suivent : 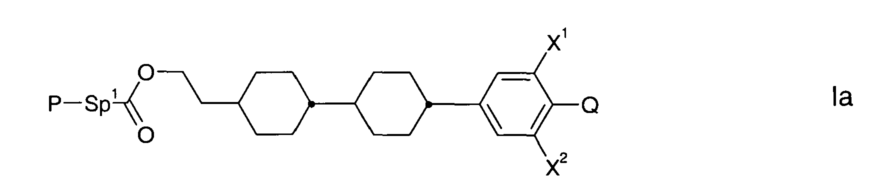 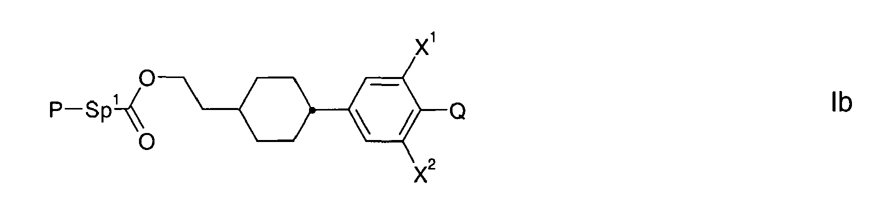 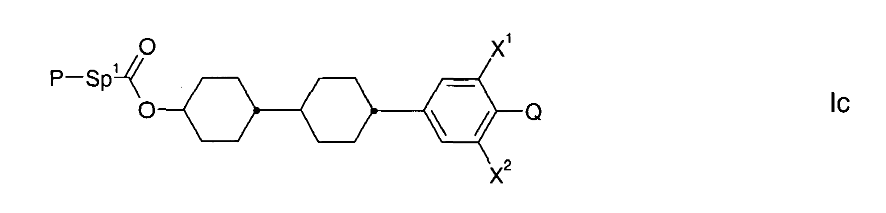 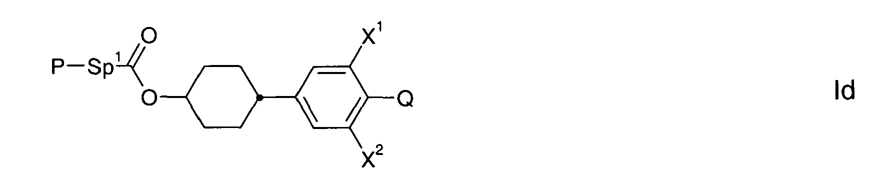 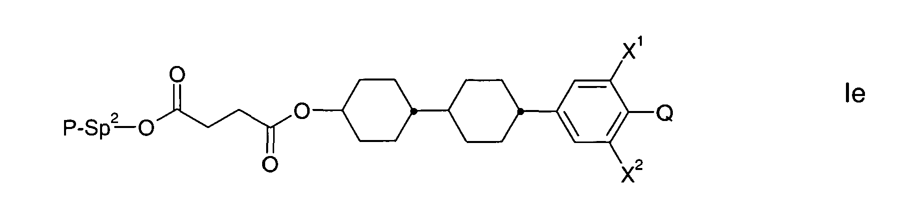 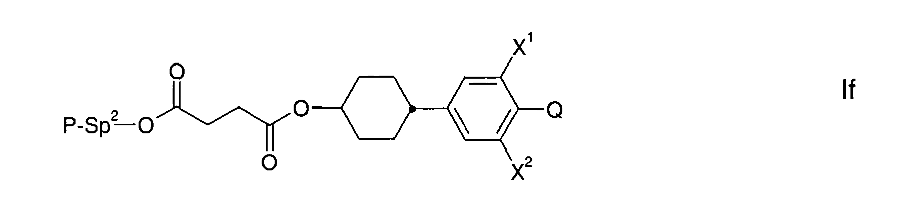 dans lesquelles P, X¹, X² et Q sont comme défini dans la formule I, Sp¹ est alkylène avec de 1 à 20 atomes de C, lequel est en option mono- ou polysubstitué par F, CI, Br, I ou CN, et où un ou plusieurs groupes CH₂ non adjacents sont en option remplacés, dans chaque cas indépendamment les uns des autres, par -O-, -S-, -NH-, -NR⁰-, -SiR⁰R⁰⁰-, -CO-, -COO-, -OCO-, -OCO-O-, -S-CO-, -CO-S-, -NR°-CO-O-, -O-CO-NR⁰-, -NR⁰-CO-NR⁰-, -CH=CH- ou -C≡C- de telle sorte que des atomes de O et/ou de S ne soient pas liés directement les uns aux autres, où R⁰ est comme défini dans la formule I et Sp² est alkylène avec de 1 à 12 atomes de C.

7. Composés selon au moins l'une des revendications précédentes, choisis parmi les formules qui suivent : 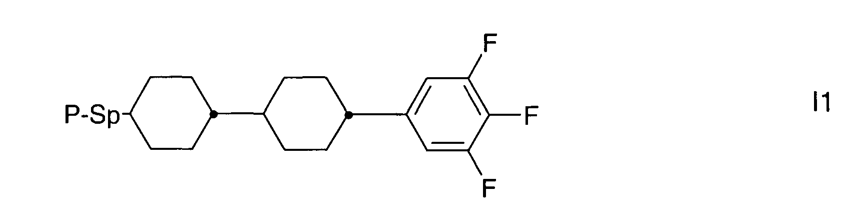 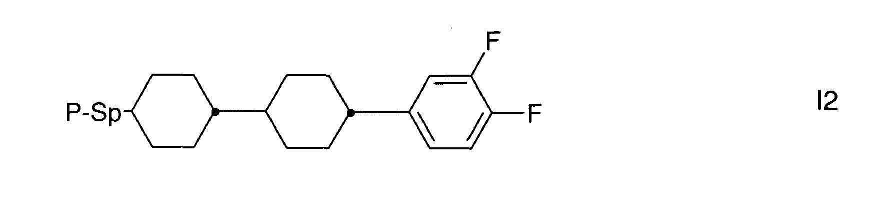 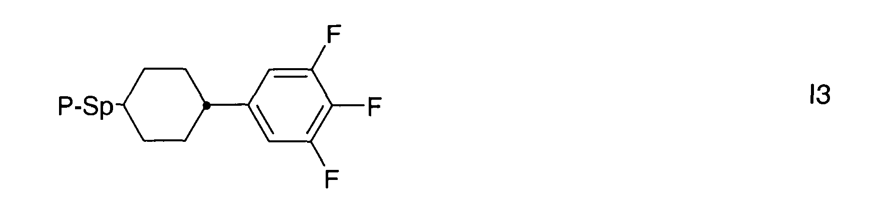 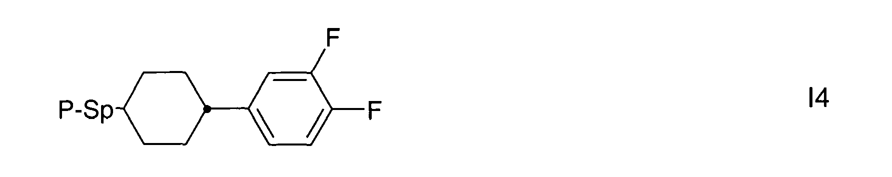 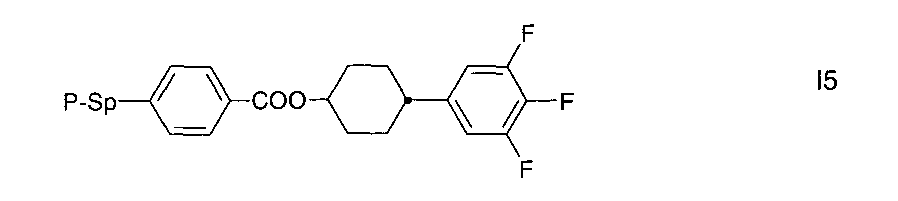 dans lesquelles P et Sp présentent les significations de la formule I.

8. Matériau cristallin liquide comprenant au moins un composé selon au moins l'une des revendications 1 à 7 et au moins un ou plusieurs composés cristallins liquides non polymérisables.

9. Matériau cristallin liquide polymérisable comprenant au moins un composé selon au moins l'une des revendications 1 à 7.

10. Polymère ou film polymérique anisotrope obtenu à partir d'un matériau cristallin liquide polymérisable selon la revendication 9.

11. Utilisation d'un composé, d'un matériau cristallin liquide polymérisable, d'un polymère ou d'un film polymérique selon au moins l'une des revendications 1 à 10 dans des films optiques, des polariseurs, des compensateurs, des séparateurs de faisceau, des films réfléchissants, des couches d'alignement, des filtres couleur, des éléments holographiques, des feuilles de matriçage à chaud, des images colorées, des marquages décoratifs ou de sécurité, des pigments cristallins liquides, des adhésifs, des résines synthétiques présentant des propriétés mécaniques anisotropes, des cosmétiques, des moyens de diagnostic, des optiques non linéaires, un stockage d'information optique, en tant que dopants chiraux, dans des dispositifs électroniques tels que par exemple des transistors à effet de champ (FET) en tant que composants d'un circuit intégré, en tant que transistors à film mince dans des applications d'affichage à écran plat ou pour des étiquettes d'identification radiofréquence (RFID), ou dans des composants de semiconduction pour des applications par diodes émettrices de lumière organiques (OLED) telles que des affichages électroluminescents ou des éclairages arrière par exemple d'affichages à cristaux liquides, pour des dispositifs photovoltaïques ou de capteur, en tant que matériaux d'électrode dans des accumulateurs, en tant que photoconducteurs, ou pour des applications électro-photographiques telles qu'un enregistrement électrophotographique.
